# EUROPÄISCHE PATENTSCHRIFT

(11) **EP 2 603 351 B1**
(45) Veröffentlichungstag und Bekanntmachung des Hinweises auf die Patenterteilung: **21.05.2014**
(21) Anmeldenummer: 11731318.9
(22) Anmeldetag: 06.07.2011
(51) Int. Cl.: B23B 31/26, B23B 31/10, B23Q 3/157, B23Q 3/12, B23B 29/034, B24B 33/10

(54) **WERKZEUGSPINDEL-WERKZEUG-KOMBINATION FÜR EINE WERKZEUGMASCHINE**
COMBINATION OF TOOL SPINDLE AND TOOL FOR A MACHINE TOOL
COMBINAISON D'UNE BROCHE D'OUTIL ET D'UN OUTIL POUR UNE MACHINE-OUTIL

(30) Priorität: 09.08.2010 DE 102010039096
(43) Veröffentlichungstag der Anmeldung: 19.06.2013
(73) Patentinhaber: MAG IAS GmbH, 73033 Göppingen (DE)
(72) Erfinder: RIEKER, Hartmut, 73087 Salach (DE); BAYHA, Thomas, 71706 Markgröningen (DE)
(74) Vertreter: Hoeger, Stellrecht & Partner Patentanwälte
(86) Internationale Anmeldenummer: PCT/EP2011/061370
(87) Internationale Veröffentlichungsnummer: WO 2012/019830

(56) Entgegenhaltungen:
- EP-A1- 0 291 048
- EP-A1- 0 507 147
- DE-A1-102007 033 350

## Beschreibung

Die Erfindung betrifft eine Werkzeugspindel-Werkzeug-Kombination für eine Werkzeugmaschine gemäss dem Oberbegriff des Patentanspruchs 1. Ein solches Gerät ist aus der EP 0 507 147 A1 bekannt. Aus der EP 0 507 147 A1 ist eine Schnittstelle zwischen einem Werkzeugträger und einem den Werkzeugträger haltenden Spannschaft einer Werkzeugmaschine, mit einem am Werkzeugträger vorgesehenen hohlen Paßzapfen, der auf seiner Innenwand mit einer ersten Spannfläche versehen ist, mit einer an der Stirnseite des Spannschafts vorgesehenen, den Paßzapfen aufnehmenden Ausnehmung, in welcher ein in axialer Richtung innerhalb des Spannzapfens verschiebbares Spannorgan angeordnet ist, welches auf seiner Außenseite mit einer zweiten Spannfläche versehen ist, die mit der ersten Spannfläche über Spannelemente zusammenwirkt, welche auf der Außenseite des Spannorgans angeordnet und entgegen einer elastischen Rückstellkraft durch das Spannorgan radial nach außen schwenkbar und in Eingriff mit der ersten und zweiten Spannfläche bringbar sind, bekannt. Die Spannelemente sind am Umfang des als Spannbolzens ausgebildeten Spannorgans in axialer Richtung frei beweglich angeordnet und werden bei einer Verlagerung des Spannorgans in Einspannrichtung zwischen die zweite Spannfläche des Spannbolzens und die erste Spannfläche im Paßzapfen gepresst werden, so dass die beiden der Schnittstelle zugeordneten Teile fest miteinander verspannt werden.

Aus der DE 10 2006 007 704 A1 ist eine Honspindel mit einem Schaft zur Übertragung von Kräften und Drehmomenten auf einen Werkzeugkörper eines Honwerkzeugs bekannt, mit einer dem Schaft zugeordneten Zustellstange, die für eine Bereitstellung einer Bearbeitungskraft auf eine Druckstange des Honwerkzeugs vorgesehen ist und mit einer endseitig am Schaft vorgesehenen Werkzeugaufnahme, die für eine lösbare Ankopplung des Honwerkzeugs gestaltet ist, wobei der Werkzeugaufnahme zumindest eine Stelleinrichtung zugeordnet ist, die für eine Festlegung des Werkzeugkörpers am Schaft ausgebildet ist.

Aus der EP 1 616 665 A1 ist ein Honwerkzeug mit einem Werkzeugkörper und zumindest einem relativ zum Werkzeugkörper bewegbaren, von einer Bestätigungsvorrichtung ansteuerbaren Honstein und mit einer Kupplungseinrichtung zur lösbaren Verbindung mit einer Honstange bekannt. Die Kupplungseinrichtung hat mindestens ein Verriegelungselement, das durch eine Halteeinrichtung zur Fixierung des Honwerkzeugs von außen betätigbar ist.

Aus der DE 44 30 113 A1 ist eine Werkzeugmaschine für die Bearbeitung von im Wesentlichen rotationssymmetrischen Werkstücken bekannt.

Aus der DE 10 2006 034 497 A1 ist ein Verfahren zur Feinbearbeitung von Innenflächen von Bohrungen in Werkstücken durch Feinbohren und nachfolgendes Honen mit den Schritten Feinbohren einer Bohrung eines Werkstücks mittels eines Feinbohrwerkzeugs einer Feinbohreinrichtung und Transfer des Werkstücks in eine Bearbeitungsposition einer Honeinrichtung zur Bearbeitung der feingebohrten Bohrung mittels eines Honwerkzeugs der Honeinrichtung bekannt.

Aus der DE 10 2007 045 045 A1 ist ein Verfahren zur Bearbeitung eines Werkstücks bekannt, bei dem das Werkstück an einem Werkstückträger einer Werkzeugmaschine festgelegt wird und das Werkstück in seinem an dem Werkstückträger festgelegten Zustand mittels eines Vorbereitungswerkzeugs spanend vorbearbeitet wird und das vorbearbeitete Werkstück mittels eines Honwerkzeugs honend bearbeitet wird.

Aus der DE 10 2006 028 728 A1 ist ein Honwerkzeug zum Fertig-Honen von Bohrungen in einem Werkstück mit mindestens einer Honleiste, einer Einstellvorrichtung zur Einstellung des Durchmessers des Honwerkzeugs im Bereich der mindestens einen Honleiste, einer Schnittstelle zum Verbinden des Honwerkzeugs mit einer herkömmlichen Maschinenspindel oder einem herkömmlichen Adapter, Zwischenstück dergleichen und einer in das das Honwerkzeug integrierten Antriebseinheit zur Betätigung der Einstellvorrichtung bekannt.

Aus der DE 198 59 051 A1 ist ein Verfahren zur spanabtragenden Bearbeitung eines Werkstücks zur Erzeugung einer nicht ebenen Oberfläche, insbesondere eines Ventilsitzes, mittels eines Werkzeugs mit einer von einer Halterung aufgenommenen Messerplatte aufweisenden Grundkörper bekannt.

Aus der EP 0 780 192 B2 ist eine Spindeleinheit für Werkzeugmaschinen bekannt.

Aus der US 7,070,491 B2 ist ein Honwerkzeug mit einem Fluidaktuator bekannt.

In der nicht vorveröffentlichten deutschen Patentanmeldung DE 10 2010 002 019 A1 ist eine Werkzeugmaschine beschrieben, welche eine Werkzeugspindel umfasst, an welcher ein Werkzeug lösbar fixierbar ist und über welche das Werkzeug rotierbar ist. Die Werkzeugspindel weist eine Beaufschlagungseinrichtung auf, welche auf mindestens eine linearbewegliche Stange eines Werkzeugs einwirkt, wenn das Werkzeug an der Werkzeugspindel fixiert ist. Die Werkzeugspindel umfasst eine Motoreinrichtung, welche an die Beaufschlagungseinrichtung gekoppelt ist und welche über die Beaufschlagungseinrichtung eine lineare Verschiebung der mindestens einen Stange antreibt.

Aus der DE 20 2008 010 140 U1 ist eine Werkzeugaufnahme zur Aufnahme eines Honwerkzeugs, das durch einen mit einem Innenkanal versehenen Werkzeugkörper, in dem eine Zustellstange axial verschieblich ist, und eine in dem Werkzeugkörper radial verschiebbare Honleiste gebildet wird, das an der Honspindel einer Honmaschine befestigbar ist, bekannt, bei der ein mit der Zustellstange des Honwerkzeugs zusammenwirkendes Kupplungsstück, auf das der Zustellstift der Honmaschine einwirkt, in der Werkzeugaufnahme verschiebbar ist. Der Werkzeugkörper ist als Rohr ausgebildet und wird im Innenkanal der Werkzeugaufnahme durch eine Spannzange gespannt, wobei der Werkzeugkörper über ein Drehlagenfixierstück und das mit der Zustellstange verbundene Kupplungsstück durch eine Nut/Passfederverbindung drehlagengesichert im Innenkanal der Werkzeugaufnahme geführt sind.

Der Erfindung liegt die Aufgabe zugrunde, eine Werkzeugspindel-Werkzeug-Kombination der eingangs genannten Art bereitzustellen, mittels welcher sich ein Werkstück auf variable Weise bearbeiten lässt.

Diese Aufgabe wird bei der eingangs genannten Werkzeugspindel-Werkzeug-Kombination erfindungsgemäß dadurch gelöst, dass die Zug-Druck-Kupplungseinrichtung eine Spannzange umfasst und dass die Spannzange im Werkzeug angeordnet ist.

Bei der erfindungsgemäßen Lösung lässt sich über die Zug-Druck-Kupplungseinrichtung eine Verspannung der mindestens einen Stange des Werkzeugs mit der Beaufschlagungseinrichtung erreichen, wobei diese Verspannung sowohl für Vorwärtshubbewegungen (Druckbewegungen) als auch für Rückhubbewegungen (Zugbewegungen) wirksam ist.

Dadurch lässt sich jede Position der mindestens einen Stange des Werkzeugs sowohl bei Vorschub als auch bei Rückhub über die Beaufschlagungseinrichtung der Werkzeugspindel definiert einstellen. Dadurch lässt sich sowohl eine Werkstückbearbeitung bei Vorwärtshubbewegung als auch bei Rückhubbewegung durchführen.

In das Werkzeug muss keine Rückstelleinrichtung für die mindestens eine Stange des Werkzeugs integriert werden, sodass sich das Werkzeug kompakter ausbilden lässt.

Durch ein Werkzeug, welches mindestens eine Stange aufweist, welche sowohl durch Druck als auch durch Zug definiert positionierbar ist, lassen sich komplexe Bearbeitungsvorgänge durchführen. Beispielsweise lassen sich Freiformflächen bearbeiten.

Die Zug-Druck-Kupplungseinrichtung umfasst eine Spannzange. Die Spannzange wird dazu verwendet, eine Formschlussverbindung zwischen der Beaufschlagungseinrichtung und der mindestens einen Stange des Werkzeugs herzustellen. Die Formschlussverbindung kann auf einfache Weise geöffnet bzw. geschlossen werden, sodass auf einfache Weise ein Werkzeug von der Werkzeugspindel entnehmbar ist bzw. dieser einsetzbar ist. Durch das Vorsehen einer Spannzange lässt sich die Werkzeugspindel auf einfache Weise ausbilden; es muss insbesondere kein Steuerrohr in der Werkzeugspindel vorgesehen werden und es muss kein drehbares Element zur Herstellung der Kopplung vorgesehen werden.

Die Spannzange ist im Werkzeug angeordnet. Dadurch kann ein Gehäuse des Werkzeuges für die Aufnahme und auch Abstützung der Spannzange genutzt werden. Es lässt sich dann die Werkzeugspindel auf einfache Weise ausbilden. Die Zug-Druck-Kupplungseinrichtung lässt sich mindestens zu einem großen Teil in das Werkzeug integrieren. Zur Herstellung der Kupplung bzw. zur Lösung der Kupplung sind vor allem nur noch Stirnflächen an der Werkzeugspindel notwendig und insbesondere sind an der Werkzeugspindel außerhalb der Beaufschlagungseinrichtung keine zusätzlichen beweglichen Elemente zur Herstellung der Kupplung bzw. Lösung der Kupplung notwendig.

Bei der erfindungsgemäßen Lösung lässt sich eine Kupplungsstelle zwischen der Beaufschlagungseinrichtung und der mindestens einen Stange des Werk-zeugs im Bereich der Spannzange ausbilden. Dadurch lassen sich die Abmessungen des Werkzeugs gering halten. Dies ist insbesondere auch vorteilhaft für einen Fluiddurchgang wie Kühlmediumdurchgang. Dies wiederum ermöglicht es, beispielsweise ein Fluidrohr kleiner Baugröße für den Fluidanschluss zwischen Werkzeugspindel und Werkzeug zu verwenden.

Es ist insbesondere vorgesehen, dass die Beaufschlagungseinrichtung mindestens eine linearbewegliche Stange aufweist, an welche die mindestens eine Stange des Werkzeugs koppelbar ist. Dadurch lässt sich direkt eine Druckbeaufschlagung und Zugbeaufschlagung der mindestens einen Stange der Beaufschlagungseinrichtung an der mindestens eine Stange des Werkzeugs erreichen.

Insbesondere umfasst die Werkzeugspindel eine Antriebseinrichtung für die Beaufschlagungseinrichtung. Dadurch lässt sich die mindestens eine Stange des Werkzeugs (Aussteuerspindel) definiert positionieren und verschieben, wobei die Positionierung und Verschiebung sowohl bei einer Vorwärtshubbewegung als auch bei einer Rückhubbewegung erreichbar ist. Die Antriebseinrichtung kann auf unterschiedliche Weise ausgestaltet sein. Beispielsweise ist sie durch eine Motoreinrichtung gebildet. Die Motoreinrichtung kann dabei einen oder mehrere Elektromotoren umfassen. Auch eine Fluidbetätigung der Beaufschlagungseinrichtung ist grundsätzlich möglich.

Günstig ist es, wenn das Werkzeug mindestens ein Werkzeugelement umfasst, welches durch die mindestens eine Stange des Werkzeugs verstellbar ist. Über das Werkzeugelement wirkt das Werkzeug auf ein Werkstück. Das Werkzeugelement ist beispielsweise eine Schneide oder Schneideneinrichtung.

Günstigerweise ist das mindestens eine Werkzeugelement eine Schneide oder eine Schneideneinrichtung oder umfasst eine solche. Beispielsweise ist das entsprechende Werkzeug ein Feinbohrwerkzeug mit Schneiden. Das Werkzeug kann beispielsweise auch ein Honwerkzeug mit einer Schneideneinrichtung sein, welche vielschneidig ist und insbesondere Honsteine umfasst.

Es ist dann insbesondere günstig, wenn das Werkzeug mindestens eine Schneide oder Schneideneinrichtung umfasst, welche an die mindestens eine Stange des Werkzeugs koppelbar ist, wobei die Schneide oder Schneideneinrichtung über die mindestens eine Stange des Werkzeugs quer zu einer Rotationsachse des Werkzeugs verstellbar ist. Durch Ankopplung über die Zug-Druck-Kupplungseinrichtung lässt sich sowohl in der Vorwärtshubbewegung als auch in der Rückhubbewegung die Querposition der Schneide oder Schneideneinrichtung relativ zu der Rotationsachse des Werkzeugs genau einstellen.

Ganz besonders vorteilhaft ist es, wenn die Zug-Druck-Kupplungseinrichtung eine Fixierungsposition definiert, in welcher die Beaufschlagungseinrichtung mit der mindestens einen Stange des Werkzeugs auf Zug und Druck verspannt ist. In der Fixierungsposition lässt sich über Einwirkung der Beaufschlagungseinrichtung auf die mindestens eine Stange des Werkzeugs diese verschieben. Bei Druckausübung erfolgt eine Vorwärtshubbewegung. Bei Rückziehen der Beaufschlagungseinrichtung erfolgt eine Zugbewegung der mindestens einen Stange. Diese Hubbewegungen werden dabei alleine durch die Beaufschlagungseinrichtung initiiert.

Bei einer konstruktiv günstigen Ausführungsform liegt in der Fixierungsposition ein Stirnende der Beaufschlagungseinrichtung an der mindestens einen Stange des Werkzeugs an. Dadurch lässt sich auf einfache Weise durch Druckausübung mittels der Beaufschlagungseinrichtung eine Vorwärtshubbewegung der mindestens einen Stange des Werkzeugs realisieren.

Es ist ferner günstig, wenn in der Fixierungsposition die mindestens eine Stange des Werkzeugs und die Beaufschlagungseinrichtung formschlüssig verbunden sind. Dadurch lässt sich auf einfache Weise bei einer Rückhubbewegung der Beaufschlagungseinrichtung eine Rückhubbewegung der mindestens einen Stange des Werkzeugs erreichen.

Bei einer Ausführungsform weist die Beaufschlagungseinrichtung eine Ausnehmung auf und die mindestens eine Stange weist einen Eintauchbereich in die Ausnehmung auf. Dadurch lässt sich auf einfache Weise eine Fixierung der mindestens einen Stange des Werkzeugs an der Beaufschlagungseinrichtung erreichen. Es lässt sich auch auf einfache Weise eine Ankopplung für eine Fluidführung beispielsweise für Kühlmedium und/oder Schmiermedium zwischen Werkzeugspindel und Werkzeug erreichen.

Günstig ist es, wenn ein zurückgesetzter Bereich an einer Außenseite der Wandung der Ausnehmung angeordnet ist. Über den zurückgesetzten Bereich der Beaufschlagungseinrichtung lässt sich auf einfache Weise eine Formschlussverbindung zwischen der Beaufschlagungseinrichtung und der mindestens einen Stange des Werkzeugs erreichen. Die Wandung der Ausnehmung lässt sich zur Ausbildung dieses zurückgesetzten Bereichs (rückspringenden Bereichs) nutzen.

Bei der erfindungsgemäßen Lösung lässt sich ein Werkzeug auf einfache Weise über die Werkzeugspindel beispielsweise zentral mit Fluid (Kühlmedium, Schmiermedium, Kühlschmiermedium) versorgen. Bei einer Ausführungsform weist das Werkzeug und/oder die Werkzeugspindel ein starres Rohr zur Fluidankopplung auf.

Bei einer vorteilhaften Ausführungsform weist das Werkzeug und/oder die Werkzeugspindel ein beweglich gelagertes Rohr zur Fluidankopplung zwischen Werkzeugspindel und Werkzeug auf. Durch ein beweglich gelagertes Rohr und beispielsweise pendelbar gelagertes Rohr lässt sich die Ankopplung erleichtern. Ein Dichtungsverschleiß aufgrund Reibung des Rohrs während des Ankopplungsvorgangs lässt sich minimieren.

Vorteilhafterweise ist die Spannzange mit der mindestens einen Stange des Werkzeugs verbunden und mit dieser verschieblich. Dadurch ist eine Zug-Druck-Kopplung zwischen der mindestens einen Stange des Werkzeugs und der Beaufschlagungseinrichtung an einem Arbeitshubbereich der Beaufschlagungseinrichtung der Werkzeugspindel realisiert.

Konstruktiv günstig ist es, wenn die Spannzange mindestens einen schwenkbaren Greifarm aufweist. Durch den schwenkbaren Greifarm lässt sich auf einfache Weise eine Fixierungsposition und eine Löseposition der Zug-Druck-Kupplungseinrichtung erreichen.

Insbesondere ist der mindestens eine Greifarm um eine Schwenkachse schwenkbar, welche quer zu einer Bewegungsrichtung der mindestens einen Stange des Werkzeugs orientiert ist. Wenn eine Sperrfläche die Schwenkbarkeit des Greifarms sperrt, dann kann auf einfache Weise eine Formschlussverbindung zwischen dem Greifarm und der Beaufschlagungseinrichtung erreicht werden. Durch Bereitstellung eines Eintauchbereichs, welcher die Schwenkbarkeit nicht mehr sperrt, kann auf einfache Weise eine Fixierungsposition gelöst werden bzw. eine Fixierungsposition ausgehend von einer Löseposition erreicht werden.

Es ist dann günstig, wenn der mindestens eine Greifarm federbeaufschlagt ist, wobei eine Federkraft bestrebt ist, den mindestens einen Greifarm von einer Achse der mindestens einen Stange des Werkzeugs wegzuschwenken. Wenn eine entsprechende Sperrfläche bereitgestellt ist, kann der Greifarm nicht so weit verschwenken, dass beispielsweise eine Formschlussverbindung zwischen der mindestens einen Stange des Werkzeugs und der Beaufschlagungseinrichtung gelöst wird. Wenn die Sperrfläche nicht mehr vorhanden ist, kann auf einfache und insbesondere automatische Weise dann die Formschlussverbindung gelöst werden.

Günstig ist es, wenn die Spannzange einen ersten Anlagebereich aufweist, welcher mit einem zweiten Anlagebereich der Beaufschlagungseinrichtung kooperiert, wobei, wenn die mindestens eine Stange des Werkzeugs an die Beaufschlagungseinrichtung gekoppelt ist, der erste Anlagebereich an den zweiten Anlagebereich anliegt und ein Formschluss hergestellt ist. Dadurch lässt sich auf einfache Weise eine Zug-Druck-Verbindung zwischen der mindestens einen Stange des Werkzeugs und der Beaufschlagungseinrichtung der Werkzeugspindel herstellen.

Bei einer konstruktiv einfachen Ausführungsform ist der erste Anlagebereich durch eine Verbreiterung an einem Endbereich eines Greifarms gebildet. Durch einen solchen verbreiterten Endbereich lässt sich auf einfache Weise eine Formschlussverbindung zwischen der Beaufschlagungseinrichtung und der mindestens einen Stange des Werkzeugs herstellen.

Der zweite Anlagebereich ist insbesondere durch einen rückspringenden Bereich an der Beaufschlagungseinrichtung gebildet. Wenn der erste Anlage- , bereich des Greifarms in eine Ausnehmung, welche durch den zweiten Anlagebereich begrenzt ist, eintaucht und diese Eintauchstellung gesichert ist, dann ist eine Formschlussverbindung hergestellt. Wenn der erste Anlagebereich ausgetaucht ist, lässt sich ein Werkzeug lösen.

Bei einer Ausführungsform weist das Werkzeug eine Stützeinrichtung auf, an welcher sich die Spannzange in einer Fixierungsposition der Zug-Druck-Kupplungseinrichtung abstützt. Eine Innenseite der Stützeinrichtung verhindert ein Ausschwenken der Spannzange und sichert dadurch insbesondere eine Formschlussverbindung der mindestens einen Stange des Werkzeugs mit der Beaufschlagungseinrichtung. Durch Eingriff an der Stützeinrichtung (beispielsweise durch Bewegung der Stützeinrichtung als Ganzes oder durch Bereitstellen einer Bewegung bzw. Beweglichkeit eines Teils der Stützeinrichtung) lässt sich eine Kupplung herstellen bzw. lösen. Auf die Stützeinrichtung wiederum kann auf einfache Weise über die Werkzeugspindel und insbesondere eine Stirnseite der Werkzeugspindel eingewirkt werden.

Insbesondere liegt in der Fixierungsposition der erste Anlagebereich an dem zweiten Anlagebereich an und die Stützeinrichtung stellt eine Sperrfläche für die Spannzange bereit.

Es ist vorteilhaft, wenn die Stützeinrichtung einen Eintauchbereich für einen Gegenbereich der Spannzange aufweist oder begrenzt, wobei in einer Fixierungsposition der Zug-Druck-Kupplungseinrichtung der Gegenbereich außerhalb des Eintauchbereichs liegt und in der Löseposition der Zug-Druck-Kupplungseinrichtung in den Eintauchbereich eingetaucht ist. Wenn der Gegenbereich in den Eintauchbereich eingetaucht ist, dann drückt die Spannzange nicht mehr auf die Beaufschlagungseinrichtung und das Werkzeug lässt sich von der Werkzeugspindel lösen. Wenn der Gegenbereich außerhalb des Eintauchbereichs liegt, und insbesondere an einer Innenseite der Stützeinrichtung außerhalb des Eintauchbereichs anliegt, lässt sich eine Schwenkbarkeit der Spannzange sperren und dadurch lässt sich eine Formschlussverbindung herstellen. Durch eine Bewegung der Stützeinrichtung oder an der Stützeinrichtung kann der Eintauchbereich über den Gegenbereich gebracht werden, um eben ein Eintauchen und damit Lösen eine Formschlussverbindung zu erreichen. Umgekehrt kann durch eine entsprechende Positionierung der Stützeinrichtung oder an der Stützeinrichtung der Gegenbereich aus dem Eintauchbereich ausgetaucht werden, um eine Formschlussverbindung mit der Beaufschlagungseinrichtung herzustellen. Durch beispielsweise Verschiebung der Stützeinrichtung lässt sich dadurch ein Fixieren bzw. Lösen eines Werkzeugs bezüglich der Beaufschlagungseinrichtung erhalten.

Wenn beispielsweise die Stützeinrichtung federbeaufschlagt ist, lässt sich automatisch eine Fixierungsstellung durch entsprechende Positionierung der Beaufschlagungseinrichtung erreichen. Durch entsprechende Kraftausübung entgegen der Federkraft auf die Stützeinrichtung lässt sich ein Lösen eines Werkzeugs durchführen.

Insbesondere liegt ein erster Anlagebereich der Spannzange nicht an einem zweiten Anlagebereich der Beaufschlagungseinrichtung an, wenn der Gegenbereich in den Eintauchbereich eingetaucht ist. Vorteilhafterweise ist eine Formschlussverbindung zwischen der mindestens einen Stange des Werkzeugs und der Beaufschlagungseinrichtung erreicht, wenn der erste Anlagebereich der Spannzange an dem zweiten Anlagebereich der Beaufschlagungseinrichtung anliegt. Durch Eintauchen des Gegenbereichs in den Eintauchbereich ist diese Formschlussverbindung gelöst.

Ganz besonders vorteilhaft ist es, wenn der Eintauchbereich oder eine Begrenzungseinrichtung des Eintauchbereichs beweglich ist. Dadurch lässt sich gesteuert der Eintauchbereich positionieren. Es lässt sich ein Austauchen ermöglichen oder erleichtern, um ein Werkzeug zu fixieren. Ferner lässt sich ein Eintauchen ermöglichen bzw. erleichtern, um ein Werkzeug zu lösen.

Es ist insbesondere vorgesehen, dass die Stützeinrichtung beweglich ist und/oder eine oder mehrere bewegliche Elemente aufweist. Dadurch lässt sich das Einfädeln bzw. Ausfädeln der Spannzange zum Lösen einer Formschlussverbindung bzw. Herstellen einer Formschlussverbindung auf einfache Weise durchführen. Die Stützeinrichtung ist im Bereich der Spannzange angeordnet und umgibt diese insbesondere. Das Werkzeug lässt sich dadurch mit geringen Abmessungen ausbilden und die Beweglichkeit der Stützeinrichtung als Ganzes oder eines Teils davon erlaubt auf einfache Weise die Lösung bzw. Fixierung. Bei einer Ausführungsform umfasst die Stützeinrichtung eine Hülse, welche beweglich und insbesondere linearbeweglich an dem Werkzeug angeordnet ist. Dadurch lässt sich auf einfache Weise eine Fixierung und insbesondere formschlüssige Fixierung der mindestens einen Stange des Werkzeugs an der Beaufschlagungseinrichtung erreichen und diese formschlüssige Fixierung lässt sich auf einfache Weise lösen.

Günstig ist es, wenn die Hülse federbeaufschlagt ist, wobei eine Federkraft bestrebt ist, die Hülse in der Fixierungsposition der Zug-Druck-Kupplungseinrichtung in Richtung der Beaufschlagungseinrichtung zu drücken. Dadurch ist es möglich, dass die Hülse in einem Arbeitshubbereich der Beaufschlagungseinrichtung eine Sperrfläche für ein Ausschwenken der Spannzange bildet. Die Position der Hülse aufgrund der Federkraft sorgt für eine formschlüssige Verbindung zwischen Spannzange und der Beaufschlagungseinrichtung.

Bei einer vorteilhaften Ausführungsform ist eine Sperreinrichtung zur Sperrung einer Verschieblichkeit der Hülse von der Beaufschlagungseinrichtung weg vorgesehen. Dadurch lässt sich ein Übergang zwischen einer Lösestellung und Fixierungsstellung und umgekehrt auf einfache Weise erreichen.

Insbesondere ist eine Löseposition der Zug-Druck-Kupplungseinrichtung durch ein Anliegen der Hülse an der Sperreinrichtung definiert. Wenn dann die Beaufschlagungseinrichtung in einer entsprechenden Position ist, liegen insbesondere ein Eintauchbereich der Hülse und ein Gegenbereich der Spannzange übereinander, sodass ein Eintauchen ermöglicht ist und eine Formschlussverbindung zwischen der mindestens einen Stange des Werkzeugs und der Beaufschlagungseinrichtung aufgehoben ist.

Günstig ist es, wenn die Hülse eine Stirnseite aufweist, auf welche die Werkzeugspindel zur Verschiebung der Hülse mittels der Werkzeugspindel und insbesondere mittels einer Stirnseite der Werkzeugspindel einwirkbar ist. Beispielsweise lässt sich eine solche Verschiebung erreichen, wenn das Werkzeug beispielsweise durch eine Werkzeuglöseeinrichtung gehalten wird und die Werkzeugspindel mit ihrer Stirnseite auf die Hülse einwirkt und diese so verschiebt, dass insbesondere ein Eintauchen des Gegenbereichs der Spannzange in einen Eintauchbereich zur Lösung einer Formschlussverbindung zwischen der mindestens einen Stange des Werkzeugs und der Beaufschlagungseinrichtung ermöglicht ist. Durch eine entsprechende translatorische Rückhubbewegung der Werkzeugspindel als Ganzes lässt sich die Hülse freigeben und eine Fixierungsposition sichern.

Bei einer weiteren Ausführungsform umfasst die Stützeinrichtung eine Zungeneinrichtung mit mindestens einer Zunge, welche quer zu einer Verschiebungseinrichtung der Stange beweglich ist. Insbesondere ist die mindestens eine Zunge elastisch ausgebildet und/oder angeordnet und entsprechend elastisch federnd beweglich. Die Zunge lässt sich dann so positionieren, dass ein Eintauchen in den Eintauchbereich bzw. ein Austauchen auf einfache Weise ermöglicht wird. Dies wiederum lässt sich insbesondere über die Werkzeugspindel (über deren Positionierung) steuern. Dadurch wird ein Fixieren und Lösen auf einfache Weise ermöglicht. Insbesondere lässt sich die Herstellung bzw. Aufhebung einer Formschlussverbindung zwischen der Spannzange und der Beaufschlagungseinrichtung der Werkzeugspindel auf einfache Weise durchführen.

Vorteilhafterweise begrenzt die Zungeneinrichtung einen Eintauchbereich für die Spannzange. Dadurch kann auf einfache Weise auf die mindestens eine Zunge zugegriffen werden und insbesondere kann über die Werkzeugspindel und vorteilhafterweise über eine Stirnseite der Werkzeugspindel auf die Zunge eingewirkt werden.

Es ist besonders vorteilhaft, wenn an dem Werkzeug eine Sperreinrichtung angeordnet ist, auf welche die Werkzeugspindel insbesondere mittels einer Stirnseite einwirkbar ist, um die Querbeweglichkeit der mindestens einen Zunge freizugeben und/oder zu sperren. Eine Sperrung der Querbeweglichkeit ist insbesondere vorgesehen, wenn das Werkzeug an der Werkzeugspindel fixiert ist. Zum Herstellen der Fixierungsposition bzw. zum Lösen der Fixierungsposition ist es vorteilhaft, wenn eine Beweglichkeit der mindestens einen Zunge zugelassen wird. Dies ermöglicht auf einfache Weise ein Lösen der Formschlussverbindung, da die Beweglichkeit der Zunge eine entsprechende Beweglichkeit der Spannzange erlaubt.

Bei einer Ausführungsform umfasst die Sperreinrichtung mindestens ein Sperrelement, welches zwischen der Zungeneinrichtung und einer Wand des Werkzeugs verschieblich ist. Die Position des mindestens einen Sperrelements bestimmt, ob eine Querbeweglichkeit der mindestens einen Zunge erlaubt ist oder nicht. Über Positionierung des mindestens einen Sperrelements lässt sich also die Querbeweglichkeit der mindestens einen Zunge steuern. Eine Verschiebung des mindestens einen Sperrelements lässt sich auf einfache Weise über die Werkzeugspindel und insbesondere über eine Stirnseite der Werkzeugspindel durch entsprechenden Angriff durchführen. Eine Rückstellbeweglichkeit ist beispielsweise über eine Federbeaufschlagung gegeben.

Ganz besonders vorteilhaft ist es, wenn das Werkzeug eine Einwirkeinrichtung für die Werkzeugspindel und insbesondere eine Stirnseite der Werkzeugspindel aufweist, über welche in Abhängigkeit der Position der Werkzeugspindel eine Eintauchbarkeit des Gegenbereichs der Spannzange in den Eintauchbereich freigebbar und/oder sperrbar ist. Dadurch lässt sich über die Werkzeugspindel als Ganzes auf das Werkzeug einwirken, um diese zu lösen bzw. zu fixieren. Die Werkzeugspindel lässt sich dadurch auf vereinfachte Weise ausbilden, da beispielsweise kein Steuerröhr an der Werkzeugspindel vorgesehen werden muss.

Insbesondere ist durch die Einwirkeinrichtung eine Bewegung oder Beweglichkeit der Stützeinrichtung oder eines Teils der Stützeinrichtung bewirkbar. Beispielsweise kann über die Einwirkeinrichtung verursacht durch die Werkzeugspindel die Stützeinrichtung als Ganzes verschoben werden, um eine Formschlussverbindung der Spannzange mit der Beaufschlagungseinrichtung des Werkzeugs zu lösen. Bei einer anderen Ausführungsform wird über die Einwirkeinrichtung, gesteuert durch die Werkzeugspindel, ein Teil der Stützeinrichtung beweglich gemacht, beispielsweise durch entsprechende elastische Ausbildung und Lösen einer Gegenabstützung, welches ein Ausfädeln der Spannzange aus einer Formschlussverbindung ermöglicht bzw. erleichtert.

Vorteilhafterweise ist eine Standardschnittstelle an der Werkzeugspindel zur Ankopplung des Werkzeugs außerhalb der Einkopplung der mindestens einen Stange des Werkzeugs an die Beaufschlagungseinrichtung vorgesehen. Diese Standardschnittstelle ist insbesondere eine Hohlkegelschaft-Schnittstelle.

Die nachfolgende Beschreibung bevorzugter Ausführungsformen dient im Zusammenhang mit den Zeichnungen der näheren Erläuterung der Erfindung. Es zeigen:
- Figur 1: eine schematische Teildarstellung eines Ausführungsbeispiels einer Werkzeugmaschine;
- Figur 2: eine Seitenansicht der Werkzeugmaschine gemäß Figur 1 ohne Verkleidung;
- Figur 3: eine schematische Darstellung eines Ausführungsbeispiels einer Werkzeugspindel;
- Figur 4: eine schematische Darstellung eines Ausführungsbeispiels einer erfindungsgemäßen Werkzeugspindel-Werkzeug-Kombination im Bereich einer Ankopplungsschnittstelle, wobei im oberen Teil (I) eine Fixierungsposition gezeigt ist und im unteren Teil (II) eine Löseposition;
- Figur 5: eine ähnliche Darstellung einer Werkzeugspindel-Werkzeug-Kombination wie Figur 4;
- Figur 6: eine schematische (Teil-)Darstellung eines Ausführungsbeispiels eines Honwerkzeugs;
- Figur 7: eine schematische (Teil-)Darstellung eines Ausführungsbeispiels eines Feinbohrwerkzeugs;
- Figur 8: eine schematische Teildarstellung eines Werkzeugs im Bereich der Ankopplung an die Werkzeugspindel;
- Figur 9: eine ähnliche Ansicht wie Figur 8 bei einer anderen Ausführungsform eines Werkzeugs; und
- Figur 10: eine schematische Darstellung eines weiteren Ausführungsbeispiels einer Werkzeugspindel-Werkzeug-Kombination im Bereich einer Ankopplungsschnittstelle, wobei im oberen Teil (I) eine Fixierungsposition gezeigt ist und im unteren Teil (II) eine Löseposition.

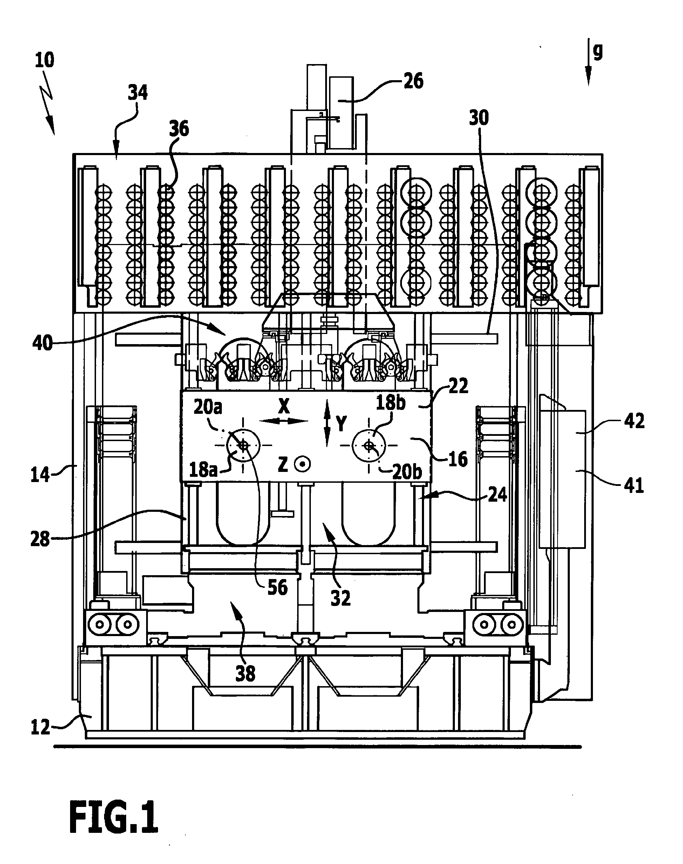

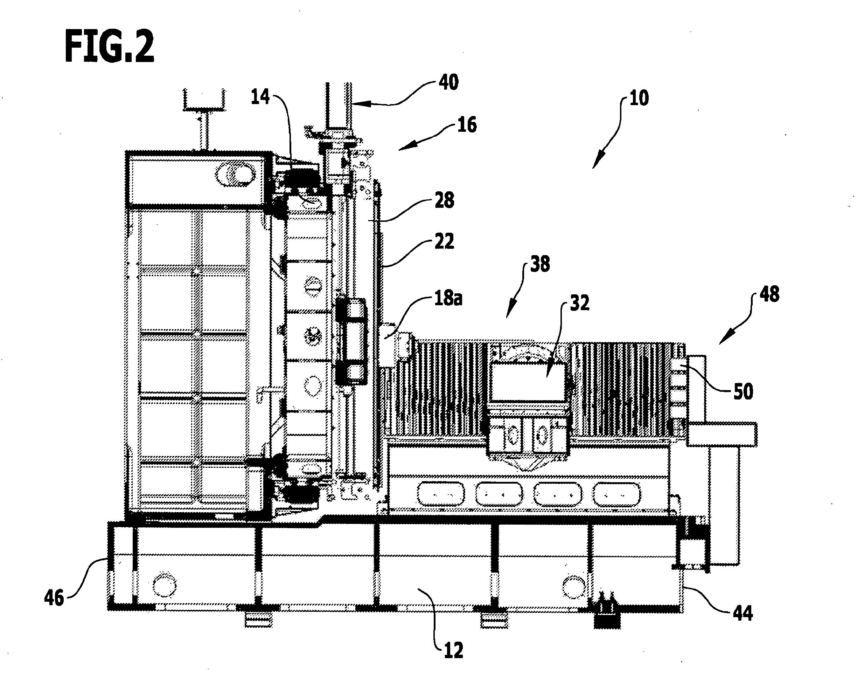

Ein Ausführungsbeispiel einer Werkzeugmaschine, an welcher eine erfindungsgemäße Werkzeugspindel-Werkzeug-Kombination einsetzbar ist, ist ein Bearbeitungszentrum. Eine Ausführungsform eines Bearbeitungszentrums, welches in den Figuren 1 und 2 in Teildarstellung schematisch gezeigt und dort mit 10 bezeichnet ist, umfasst ein Maschinenbett 12, an welchem ein Maschinengestell 14 angeordnet ist. Das Maschinengestell 14 ist portalartig ausgebildet und ragt in einer bezogen auf die Schwerkraftrichtung g vertikalen Richtung über das Maschinenbett 12 hinaus. An dem Maschinengestell 14 ist eine Werkzeugträgereinrichtung 16 gehalten, welche mindestens eine Werkzeugspindel 18 umfasst.

Bei dem gezeigten Ausführungsbeispiel umfasst die Werkzeugträgereinrichtung 16 eine erste Werkzeugspindel 18a und eine zweite Werkzeugspindel 18b. Ein an den jeweiligen Werkzeugspindeln 18a, 18b gehaltenes Werkzeug ist um eine Rotationsachse 20a, 20b rotierbar. Bei der Darstellung gemäß Figur 1 liegen die Rotationsachsen 20a, 20b parallel zueinander. Sie sind parallel zu einer Z-Richtung orientiert, welche bei der Darstellung gemäß Figur 1 senkrecht zur Zeichenebene liegt. Die Z-Richtung ist bezogen auf die Schwerkraftrichtung g insbesondere eine horizontale Richtung.

Die Werkzeugträgereinrichtung 16 ist als Schlitten 22 ausgebildet, welcher an einer Schlittenführung 24 gehalten ist und über die Schlittenführung 24 in einer Y-Richtung (Richtung und Gegenrichtung) linear beweglich ist. Die Y-Richtung liegt quer und insbesondere senkrecht zur Z-Richtung. Bezogen auf die Schwerkraftrichtung g ist die Y-Richtung insbesondere eine vertikale Richtung.

Zum Antrieb der Bewegung des Schlittens 22 in der Y-Richtung und zu dessen Positionierung ist dem Schlitten 22 eine Antriebseinrichtung 26 zugeordnet. Diese kann beispielsweise einen Kugelgewindetrieb oder einen Linearmotor umfassen.

Der Schlitten 22 ist selber an einem Schlitten 28 gehalten, welcher in einer X-Richtung (Richtung und Gegenrichtung) an einer Schlittenführung 30 linear verschieblich ist. Zur Verschiebung und Positionierung ist ein entsprechender Antrieb vorgesehen. Die X-Richtung ist quer und insbesondere senkrecht zu der Y-Richtung und der Z-Richtung. Die X-Richtung ist bezogen auf die Schwerkraftrichtung g insbesondere eine horizontale Richtung.

An dem Maschinenbett 12 ist (mindestens) ein Werkstückträger 32 angeordnet. Die erste Werkzeugspindel 18a und die zweite Werkzeugspindel 18b und damit daran gehaltene Werkzeuge und der Werkstückträger 32 sind in der Z-Richtung (Richtung und Gegenrichtung) relativ zueinander beweglich. Ein an dem Werkstückträger 32 gehaltenes Werkstück und die Werkzeugspindel 18a bzw. 18b sind dadurch relativ zueinander in der X-Richtung als erste Richtung, der Y-Richtung als zweite Richtung und der Z-Richtung als dritte Richtung verschieblich.

Bei einem Ausführungsbeispiel sind die Werkzeugspindeln 18a, 18b in der Z-Richtung zur Bearbeitung eines Werkstücks nicht beweglich und der Werkstückträger 32 ist in der Z-Richtung verschieblich an dem Maschinenbett gehalten. Dem Werkstückträger 32 ist dazu ein Antrieb zugeordnet.

Bei einem alternativen Ausführungsbeispiel sind die erste Werkzeugspindel 18a und die zweite Werkzeugspindel 18b verschieblich an der Werkzeugträgereinrichtung 16 gehalten, um eine Z-Verschieblichkeit zu ermöglichen.

Es ist auch möglich, eine Z-Verschieblichkeit der Werkzeugspindeln 18a, 18b an der Werkzeugträgereinrichtung 16 und eine Z-Verschieblichkeit des Werkstückträgers 32 an dem Maschinenbett zu kombinieren.

Es kann beispielsweise auch vorgesehen sein, dass der Werkstückträger 32 um eine beispielsweise vertikale Achse drehbar ist.

Bei dem gezeigten Ausführungsbeispiel weist das Bearbeitungszentrum 10 eine Lagereinrichtung 34 für Werkzeuge 36 auf, welche oberhalb eines Arbeitsraums 38, in welchem Werkstücke bearbeitet werden, angeordnet ist.

Ferner ist eine Werkzeugwechseleinrichtung 40 vorgesehen, über welche Werkzeuge 36 an die Werkzeugspindeln 18a und 18b einsetzbar sind und von dieser entnehmbar sind.

Ein entsprechendes Bearbeitungszentrum ist beispielsweise in der WO 2009/033920 A1 beschrieben. Auf diese Druckschrift wird Bezug genommen und diese Druckschrift wird zum Teil der Offenbarung gemacht.

Das Bearbeitungszentrum 10 kann auch nur eine einzige Werkzeugspindel umfassen oder mehr als zwei Werkzeugspindeln umfassen.

Das Bearbeitungszentrum 10 weist eine Steuerungseinrichtung 41 auf, welche mindestens teilweise in einem Schaltkasten 42 angeordnet ist. Über die Steuerungseinrichtung 41 lassen sich Abläufe der Werkstückbearbeitung steuern.

Das Bearbeitungszentrum 10 hat eine Vorderseite 44 und eine Rückseite 46. Der Arbeitsraum 38 weist zu der Vorderseite 44 zu.

Bei einem Ausführungsbeispiel sind an der Vorderseite 44 eine oder mehrere Zusatzeinrichtungen 48 angeordnet. Über eine Zusatzeinrichtung 48 kann auf ein Werkstück zusätzlich zu Werkzeugen an Werkzeugspindeln 18 eingewirkt werden.

Bei einem Ausführungsbeispiel ist als Zusatzeinrichtung 48 eine Reinigungseinrichtung 50 vorgesehen. Ein Werkstück ist über den Werkstückträger 32 zu der Reinigungseinrichtung 50 verfahrbar. Dort kann das Werkstück beispielsweise nach einem ersten Bearbeitungsvorgang vor einem zweiten Bearbeitungsvorgang gereinigt werden. Dadurch lässt sich die Bearbeitungsqualität verbessern. Die Reinigung erfolgt beispielsweise durch Anblasen oder durch direkte Einwirkung einer Reinigungseinrichtung.

Die Zusatzeinrichtung 48 kann beispielsweise auch durch eine Fluidstrahleinrichtung gebildet sein oder eine solche umfassen. Durch die Fluidstrahleinrichtung lässt sich ein Werkstück mit dem Fluidstrahl beaufschlagen. Der Fluidstrahl kann ein Gasstrahl und/oder Flüssigkeitsstrahl sein. Bei entsprechender Ausbildung lässt sich dadurch beispielsweise ein Fluidstrahl-Honvorgang durchführen.

Es kann beispielsweise alternativ oder zusätzlich vorgesehen sein, dass die Zusatzeinrichtung 48 durch eine Lasereinrichtung gebildet ist oder eine solche umfasst. Dadurch ist es beispielsweise möglich, eine Laserstrukturierbearbeitung eines Werkstücks durchzuführen.

Die Zusatzeinrichtung 48 oder die Zusatzeinrichtungen 48 sind an einem Rand des Arbeitsraums 38 z. B. an der Vorderseite 44 angeordnet, so dass eine Zusatzeinrichtung 48 die relative Beweglichkeit zwischen dem Werkstückträger 32 und den Werkzeugspindeln 18a, 18b nicht behindert.

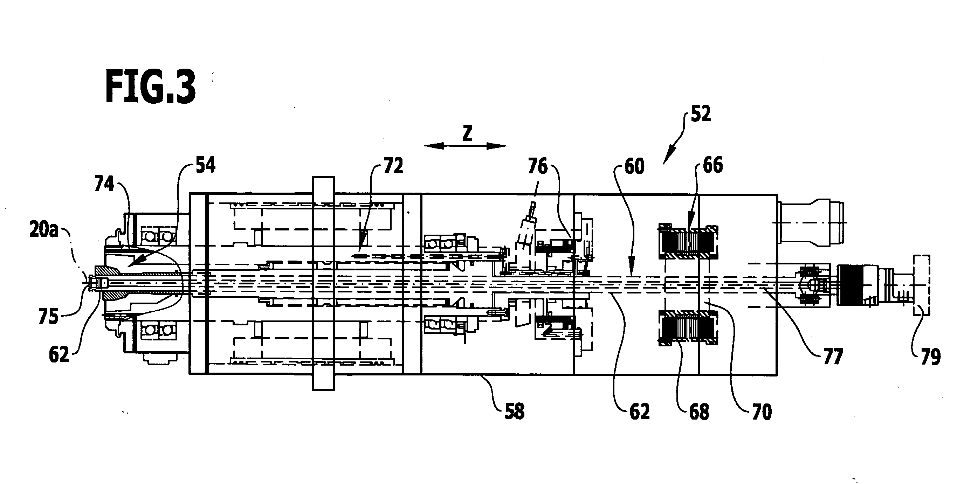

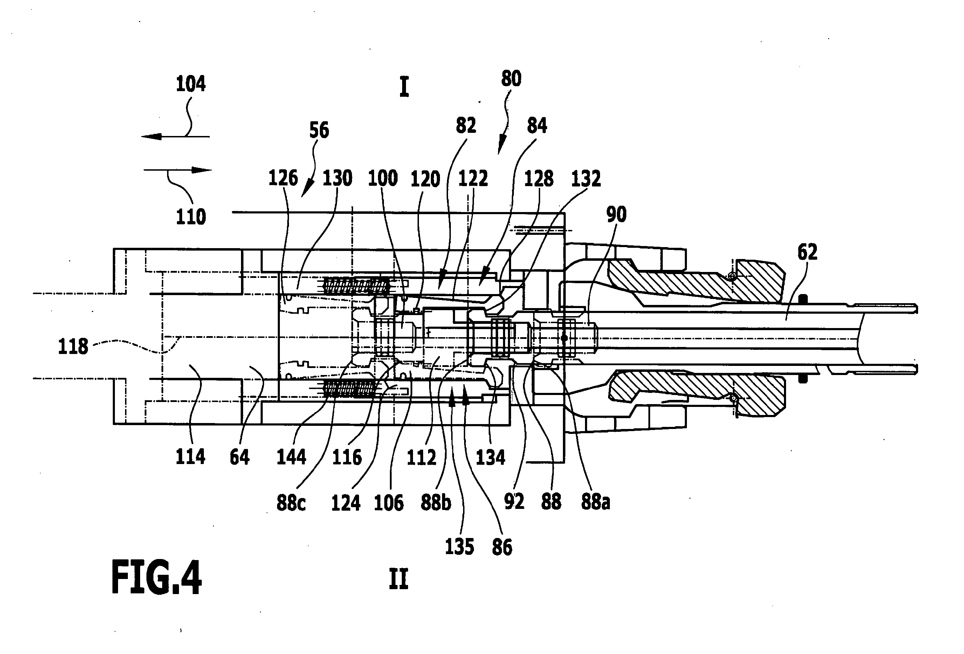

Ein Ausführungsbeispiel einer Werkzeugspindel, welches in Figur 3 schematisch gezeigt und dort mit 52 bezeichnet ist, umfasst eine Schnittstelle 54 an ein Werkzeug. Die Schnittstelle 54 ist beispielsweise als Hohlkegelschaft (HSK)-Schnittstelle ausgebildet. An der Schnittstelle 54 ist ein Werkzeug (in Figur 4 mit dem Bezugszeichen 56 angedeutet) in die Werkzeugspindel 52 einsetzbar und mit dieser lösbar fixierbar. Die Fixierung ist dabei drehfest, so dass bei der Rotation eines entsprechenden rotierbaren Teils der Werkzeugspindel 52 um beispielsweise die Rotationsachse 18a das Werkzeug 56 mitrotiert wird.

Die Werkzeugspindel 52 umfasst ein Gehäuse 58. In dem Gehäuse 58 ist eine Beaufschlagungseinrichtung 60 linear verschieblich gelagert. Die Beaufschlagungseinrichtung 60 umfasst insbesondere eine linear verschiebliche Stange 62. Ein Werkzeug 56 weist, wie untenstehend noch näher erläutert wird, eine Stange 64 auf. Bei Fixierung des Werkzeugs 56 an der Werkzeugspindel 52 an der Schnittstelle 54 werden auch die Stangen 62 und 64 miteinander gekoppelt. Über gesteuerte Bewegung der Stange 62 der Werkzeugspindel 52 lässt sich dann auch die Stange 64 des Werkzeugs 56 bewegen.

Die Werkzeugspindel 52 umfasst eine Antriebseinrichtung 66, welche in dem Gehäuse 58 der Werkzeugspindel 52 angeordnet ist. Die Antriebseinrichtung 66 ist in die Werkzeugspindel 52 integriert. Die Antriebseinrichtung 66 umfasst beispielsweise einen Elektromotor 68. Grundsätzlich kann auch ein Fluidantrieb und insbesondere pneumatischer oder hydraulischer Antrieb vorgesehen sein.

Die Antriebseinrichtung 66 ist beispielsweise über einen Kugelgewindetrieb, welcher in Figur 3 mit dem Bezugszeichen 70 bezeichnet ist, an die Stange 62 gekoppelt. Über den Kugelgewindetrieb 70 lässt sich eine Rotationsbewegung des Elektromotors 68 in eine Linearbewegung der Stange 62 umsetzen.

Durch entsprechende Ansteuerung der Antriebseinrichtung 66 lässt sich ein definierter Vorschub/Rückhub der Stange 62 der Werkzeugspindel 52 und damit auch der Stange 64 des Werkzeugs 56 erreichen. Insbesondere lässt sich die Position der Stange 62 und damit auch der Stange 64 definiert und insbesondere zeitlich definiert vorgeben.

Die Steuerung der Bewegung der Stange 62 über entsprechende Ansteuerung der Antriebseinrichtung 66 erfolgt durch einen entsprechenden Teil der Steuerungseinrichtung 41. Über den Elektromotor 68 erfolgt eine elektromechanische, angetriebene Bewegung der Stange 62 und damit der Stange 64.

Die Werkzeugspindel 52 umfasst eine als Ganzes mit 72 bezeichnete Antriebseinrichtung, über welche sich die Schnittstelle 54 an das Werkzeug 56 um beispielsweise die Rotationsachse 20a rotieren lässt bzw. drehen lässt.

Die Werkzeugspindel 52 weist eine Druckluft-Schnittstelle 74 für das Werkzeug 56 auf. Die Werkzeugspindel 52 umfasst eine Luftzuführungseinrichtung 76. Diese Luftzuführungseinrichtung 76 steht in fluidwirksamer Verbindung mit der Druckluft-Schnittstelle 74. Das entsprechende Werkzeug 56 weist eine Gegenschnittstelle zu der Druckluft-Schnittstelle 74 auf. Es lässt sich dann Druckluft von der Werkzeugspindel 52 in das Werkzeug 56 einkoppeln. Diese Druckluft kann als Blasluft verwendet werden oder, wie untenstehend noch näher erläutert wird, als Messluft bei einer Staudruckmessung.

Die Werkzeugspindel 52 weist weiterhin eine Schnittstelle 75 für Kühlschmierstoff auf, mit welchem das Werkzeug 56 versorgbar ist. Beispielsweise ist in der Stange 62 ein Kanal 77 für Kühlschmierstoff gebildet, welcher in fluidwirksamer Verbindung mit der Schnittstelle 75 und einer Versorgungseinrichtung 79 für Kühlschmierstoff der Werkzeugmaschine steht.

Bei einer Ausführungsform erfolgt die Bearbeitung mindestens teilweise mit wassermischbarem Kühlschmierstoff (Emulsion) oder mit Öl wie Honöl.

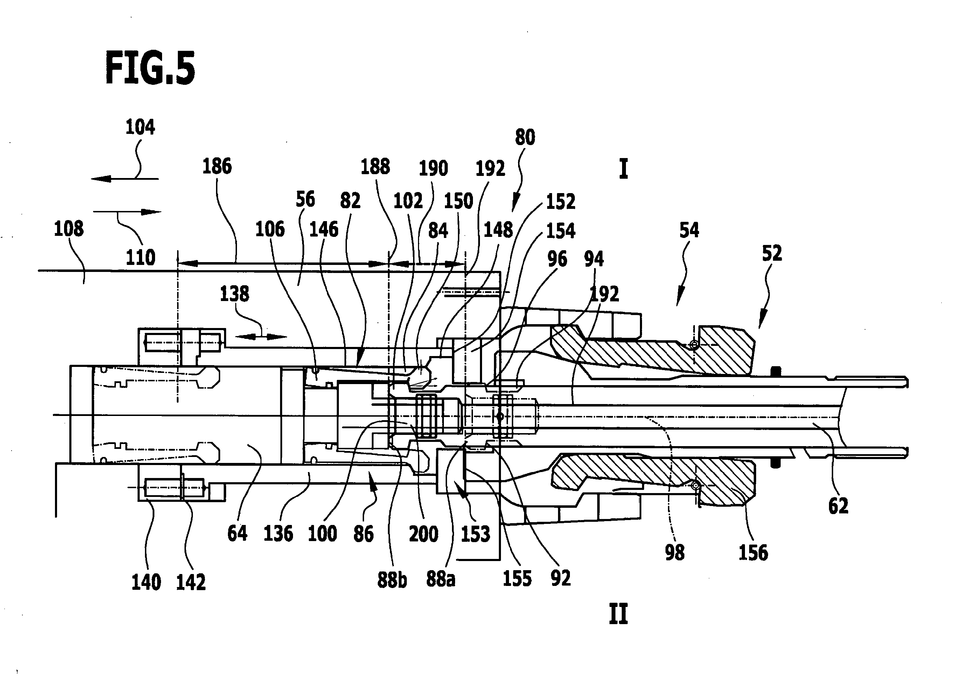

Ein Ausführungsbeispiel einer erfindungsgemäßen Werkzeugspindel-Werkzeug-Kombination, welches in den Figuren 4 und 5 schematisch in einer Teildarstellung gezeigt und dort mit 80 bezeichnet ist, umfasst eine Zug-Druck-Kupplungseinrichtung 82, durch welche die Stange 62 der Beaufschlagungseinrichtung 60 der Werkzeugspindel 52 und die Stange 64 des Werkzeugs 56 derart aneinander gekoppelt sind, dass die Stange 64 des Werkzeugs 56 eine durch die Stange 62 initiierte Druckbewegung (bei welcher die Stange 62 gewissermaßen die Stange 64 schiebt) oder Zugbewegung (bei welcher die Stange 62 die Stange 64 zieht) durchführen kann.

In den Figuren 4 und 5 ist in einer oberen Hälfte eine Position der Zug-Druck-Kupplungseinrichtung 82 gezeigt, welche eine Fixierungsposition 84 ist. In dieser Position sind die Stange 62 und die Stange 64 für eine mögliche Zugbewegung und Druckbewegung gekoppelt.

In der unteren Hälfte ist eine Löseposition 86 der Zug-Druck-Kupplungseinrichtung 82 gezeigt, in welcher ein Werkzeug 56 an der Werkzeugspindel 52 einsetzbar ist.

Die Stange 62 der Werkzeugspindel 52 weist im Bereich eines vorderen Endes 88 eine Ausnehmung 90 auf. (In Figur 4 sind unterschiedliche Stellungen 88a, 88b, 88c des vorderen Endes 88 gezeigt. In Figur 5 sind die Stellungen 88a, 88b des vorderen Endes 88 gezeigt.)

Die Ausnehmung 90 ist von einer Wandung 92 umgeben. Die Wandung 92 weist an ihrer Außenseite eine Ausnehmung 94 auf, welche ein vertiefter Bereich bezogen auf eine äußere Oberfläche der Wandung ist. Durch die Ausnehmung 94 ist ein zurückgesetzter Bereich 96 vorgegeben, welcher quer zu einer Achse 98 der Stange 62 orientiert ist. (Die Achse 98 liegt koaxial zu der entsprechenden Rotationsachse 20a.)

Die Stange 64 des Werkzeugs 56 hat einen Eintauchbereich 100, welcher zum Eintauchen in die Ausnehmung 90 der Stange 62 vorgesehen ist. Wenn die Stange 64 an die Stange 62 angekoppelt ist, dann ist der Eintauchbereich 100 in der Ausnehmung 90 positioniert.

Der Eintauchbereich 100 ragt über einen Stirnfläche 102 der Stange 64 hinaus. Die Stirnfläche 102 ist beispielsweise ringförmig. Wenn die Stange 62 und die Stange 64 aneinander gekoppelt sind, liegt das vordere Ende 88 an der Stirnfläche 102 an. Die Stange 62 kann dann eine Druckkraft auf die Stange 64 ausüben und diese in einer Vorschubrichtung 104 nach vorne (von der Werkzeugspindel 52 weg) verschieben.

Die Zug-Druck-Kupplungseinrichtung 82 weist eine Spannzange 106 auf. Diese Spannzange 106 ist in dem Werkzeug 56 innerhalb eines Gehäuses 108 des Werkzeugs 56 angeordnet.

Die Spannzange 106 ist dabei schwenkbar an der Stange 64 positioniert und mit dieser in der Vorschubrichtung 104 und in einer Rückhubrichtung 110 linear verschieblich.

Die Stange 64 hat einen Endbereich 112, an welchem die Stirnfläche 102 gebildet ist und an welchem der Eintauchbereich 100 sitzt. Dieser Endbereich 112 hat einen kleineren Durchmesser als ein Hauptbereich 114 der Stange 64. Zwischen dem Endbereich 112 und dem Hauptbereich 114 ist ein Zwischenbereich 116 angeordnet. Der Endbereich 112, der Hauptbereich 114 und der Zwischenbereich 116 liegen insbesondere koaxial zu einer Achse 118 der Stange 64. (Die Achse 118 und die Achse 98 sind in der Fixierungsposition 84 der Zug-Druck-Kupplungseinrichtung koaxial zueinander.)

Der Zwischenbereich weist einen kleineren Durchmesser als der Hauptbereich 114 und der Endbereich 112 auf. Der Zwischenbereich 116 ist relativ zu einem Endbereich 112 zurückgesetzt. Dadurch ist ein Aufnahmeraum 120 gebildet. An diesem Aufnahmeraum ist die Spannzange 106 an der Stange 64 positioniert.

Die Spannzange 106 umfasst dabei Greifarme 122, beispielsweise zwei Greifarme, welche jeweils um eine Schwenkachse 124 schwenkbar an der Stange 64 positioniert sind, wobei die Schwenkachse 124 quer und insbesondere senkrecht zu der Achse 118 liegt. In den Figuren 4 und 5 liegt die jeweilige Schwenkachse 124 senkrecht zur Zeichenebene.

Ein Fixierungsbereich 126 eines jeweiligen Greifarms 122 liegt in dem Aufnahmeraum 120. Der Greifarm 122 erstreckt sich dann an einer Außenseite des Endbereichs 112 vorbei und weist selber einen Endbereich 128 auf. Ein Greifarm 122 ist dabei durch eine Federeinrichtung 130 federbeaufschlagt, wobei eine Federkraft bestrebt ist, einen entsprechenden Greifarm 122 nach außen, das heißt von der Achse 118 weg zu verschwenken.

Der Endbereich eines Greifarms 122 weist einen der Ausnehmung 94 zugewandten ersten Anlagebereich 132 auf. An dem zurückgesetzten Bereich 96 der Ausnehmung 94 ist ein zweiter Anlagebereich 134 gebildet. Der erste Anlagebereich 132 an dem Endbereich 128 steht dabei an dem Greifarm 122 über einen Bereich außerhalb des Endbereichs 128 in Richtung der Ausnehmung 94 heraus. Wenn der erste Anlagebereich 132 der Stange 64 an dem zweiten Anlagebereich 134 der Stange 62 anliegt, und die Schwenkbarkeit des entsprechenden Greifarms 122 von der Stange 62 weg gesperrt ist (siehe unten), dann ist ein Formschluss zwischen dem Endbereich 128 und der Stange 62 erreicht. Dadurch ist eine Zugkupplung zwischen der Stange 62 und der Stange 64 realisiert.

Die Greifarme 122 der Spannzange 106 sind dabei so dimensioniert, dass bei Anliegen des vorderen Endes 88 der Stange 62 an der Stirnfläche 102 der erste Anlagebereich 132 an den zweiten Anlagebereich 134 anliegen kann.

An dem Werkzeug 56 ist die Stange 64 umgebend eine Stützeinrichtung 135 beispielsweise in Form einer Hülse 136 angeordnet. Die Hülse 136 ist dabei in einer Richtung/Gegenrichtung 138 linear verschieblich, welche parallel zu der Achse 118 bzw. der Vorschubrichtung 104/Rückhubrichtung 110 ist.

Bezüglich des Gehäuses 108 des Werkzeugs 56 ist fest eine Sperreinrichtung 140 angeordnet, welche die Beweglichkeit der Hülse 136 von der Werkzeugspindel 82 weg sperrt. Die Sperreinrichtung 140 stellt eine Anlagefläche 142 bereit, welche beispielsweise ringförmig ist.

An der Sperreinrichtung 140 ist eine Federeinrichtung 144 abgestützt (Figur 4), welche eine oder mehrere Federn umfasst und welche auf die Hülse 136 wirken. Die Federkraft der Federeinrichtung 144 ist bestrebt, wenn keine Gegenkraft wirkt, die Hülse 136 in Richtung der Werkzeugspindel 82 zu drücken.

Die Stange 64 des Werkzeugs 56 gleitet in der Hülse 136. Die Hülse 136 weist eine Innenseite 146 auf, welche den Zwischenbereich und den Endbereich 112 der Stange 64 umgibt. In der Fixierungsposition 84 der Zug-Druck-Kupplungseinrichtung 82 stützt sich der Endbereich 128 der Greifarme 122 an dieser Innenseite 146 ab. Der Endbereich 128 ist dabei dann so dimensioniert, dass der erste Anlagebereich 132 an dem zweiten Anlagebereich 134 anliegt und kein Austauchen erfolgen kann aufgrund Anliegen des Endbereichs 128 an der Innenseite 146.

Die Innenseite 146 ist dabei insbesondere zylindrisch.

Wenn die Stange 64 auf Zug oder Druck durch die Stange 62 bewegt wird, dann gleitet der Endbereich 128 der Spannzange 106 an der Innenseite der Hülse 136. Entsprechend muss die Antriebseinrichtung 66 die Reibungskraft für die Reibung zwischen dem Endbereich 128 und der Innenseite 146 der Hülse 136 überwinden. Durch entsprechende Wahl der Kraftangriffspunkte eines Greifarms 122 an den Anlagebereich 132 bzw. 134 und Anlage an eine Stirnfläche im Aufnahmeraum 120 kann diese Reibungskraft klein gehalten werden.

An der Innenseite 146 der Hülse 136 ist ein Eintauchbereich 148 gebildet, welcher ein zurückgesetzter Bereich ist und beispielsweise ringförmig ist. Der Endbereich 128 der Spannzange 106 weist beispielsweise in Form einer Verdickung einen Gegenbereich 150 auf, welcher in den Eintauchbereich 148 eintauchen kann. Wenn der Gegenbereich 150 in den Eintauchbereich 148 eingetaucht ist, dann ist der erste Anlagebereich 132 aus der Ausnehmung 94 ausgetaucht und der erste Anlagebereich 132 liegt nicht an dem zweiten Anlagebereich 134 an. Es ist dann die Löseposition 86 erreicht und die Zug-Druck-Kupplungseinrichtung 82 gibt die Stange 64 frei, sodass das Werkzeug 56 entnommen werden kann.

Die Hülse 136 weist eine der Werkzeugspindel 52 zugewandte Stirnseite 152 auf. Der Eintauchbereich 148 ist an der Stirnseite 152 gebildet. An der Stirnseite 152 sitzt eine Anlagefläche. Es ist dazu an der Stirnseite 152 ein Anlageelement 154 angeordnet. Das Anlageelement 154 ist mit der Hülse 136 verschieblich. Die Federeinrichtung 144 drückt in der Fixierungsposition 84 die Hülse 136 mit dem Anlageelement 154 an der Stirnseite 152 zu der Werkzeugspindel 52 hin, ohne dass das Anlageelement 154 diese berührt. Der Eintauchbereich 148 liegt dann an dem Anlageelement 154 und der Gegenbereich 150 ist aus dem Eintauchbereich 148 ausgetaucht und der erste Anlagebereich 132 kann an den zweiten Anlagebereich 134 anliegen.

Wenn durch entsprechende Kraftausübung auf das Anlageelement 154 durch eine Stirnseite 155 der Werkzeugspindel 52 (Figur 5 unten) eine Kraft ausgeübt wird, welche die Kraft der Federeinrichtung 144 überwindet (siehe Figur 5 unten), dann wird die Hülse 136 zu der Sperreinrichtung 140 verschoben, bis sie dort anliegt. Dadurch wird der Eintauchbereich 148 in der Vorschubrichtung 104 verschoben und der Gegenbereich 150 kann in den Eintauchbereich 148 eintauchen. Dies ermöglicht eine Entkopplung der Stange 64 von der Stange 62, das heißt die Löseposition 86 ist erreicht. Das Ausschwenken der Greifarme 122 zum Eintauchen des Gegenbereichs 150 in den Eintauchbereich 148 wird dabei durch die Federeinrichtung 130 bewirkt.

Das Werkzeug 56 lässt sich außerhalb der Stange 64 an der Werkzeugspindel 52 über eine konventionelle Schnittstelle wie Hohlkegelschaft-Schnittstelle fixieren. Es ist dazu beispielsweise eine schwenkbare Spannzange 156 vorgesehen, welche für eine drehfeste Kopplung des Werkzeugs 56 an die Werkzeugspindel 52 sorgt.

Durch die Stange 64 des Werkzeugs 56 lassen sich ein oder mehrere Werkzeugelemente, welche insbesondere eine Schneide umfassen oder eine Schneide sind bzw. eine Schneideneinrichtung umfassen oder eine Schneideneinrichtung sind, definiert verstellen.

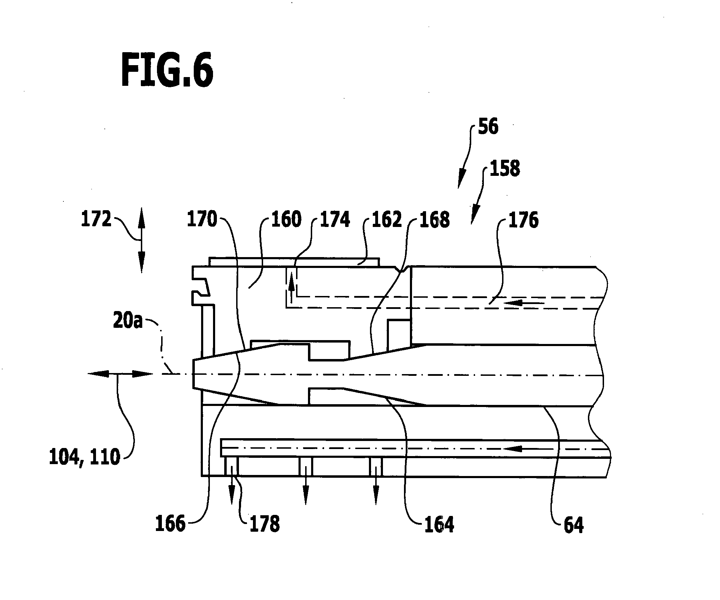

Ein Beispiel für ein entsprechendes Werkzeug 56 ist ein Honwerkzeug 158 (Figur 6). Dieses weist (mindestens) eine Honleiste 160 auf, an welcher eine Schneideneinrichtung 162 sitzt. Die Schneideneinrichtung 162, über welche das Honwerkzeug 158 auf ein Werkstück wirkt, bildet ein entsprechendes Honelement und ist vielschneidig ausgebildet. Insbesondere umfasst die Schneideneinrichtung 162 gebundenes Korn. Bei einer Honbearbeitung liegt aufgrund der Schneideneinrichtung 162 eine ständige Flächenberührung zwischen dem Honwerkzeug 158 und dem Werkstück vor. Bei der Honbearbeitung findet zwischen dem rotierenden Honwerkzeug 158 und dem Werkstück ein oszillierender Richtungswechsel der Längsbewegung statt. Diese Längsbewegung wird dabei durch die relative Bewegung zwischen dem Werkstückträger 32 und der Werkzeugspindel 52 erreicht. Die beim Honvorgang erzielten Werkstückoberflächen weisen parallele, sich kreuzende Riefen auf.

Die Honleiste 160 ist an die Stange 64 gekoppelt. Beispielsweise weist dazu die Stange 64 einen ersten keilförmigen Bereich 164 und einen zweiten keilförmigen Bereich 166 auf. Die Honleiste 160 ist an dem ersten keilförmigen Bereich 164 mit einem ersten Bereich 168 mit keilförmiger Gegenlauffläche und an dem zweiten keilförmigen Bereich 166 mit einem zweiten Bereich 170 mit keilförmiger Gegenlauffläche abgestützt. Ein Vorschub der Stange 64 in der Vorschubrichtung 104 parallel zur Rotationsachse 18a bewirkt eine Verschiebung der Honleiste 160 in einer Richtung 172 quer und insbesondere senkrecht zu der Richtung 104. Eine entsprechende Position der Honleiste 160 bezogen auf die Richtung 172 ist durch die Position der Stange 64 in der Richtung 104/Gegenrichtung 110 bestimmt. Diese Position wird über die Antriebseinrichtung 66 festgehalten. Diese Position wiederum ist einstellbar.

Über die Veränderung der Position der Stange 64 (bewirkt durch Änderung der Position der Stange 62) lässt sich die Schneideneinrichtung 162 relativ zu einem Werkstück verstellen. Es lässt sich dadurch ein Anpressdruck des Honwerkzeugs 158 an ein Werkstück definiert gesteuert einstellen.

Durch das Honwerkzeug 158 lassen sich beispielsweise Bohrungen honbearbeiten.

Das Honwerkzeug 158 weist eine oder mehrere Öffnungen 174 für Druckluft auf, welche mit einer Druckluft-Schnittstelle in fluidwirksamer Verbindung stehen. Dadurch lässt sich beispielsweise in eine Bohrung Druckluft einblasen. Diese Öffnung oder Öffnungen stehen über einen oder mehrere Kanäle 176 in fluidwirksamer Verbindung mit der Druckluft-Schnittstelle.

Durch pneumatische Staudruckmessung kann über Druckluft beispielsweise der Durchmesser einer Bohrung an dem Honwerkzeug 158 gemessen werden. Dadurch ist ein Nachmessen beispielsweise nach einer Feinbohroperation (siehe unten) durch eine separate Messeinrichtung wie einen Messdorn nicht notwendig. Das ohnehin vorgesehene Honwerkzeug ist dann auch das Messwerkzeug zur Durchmesserbestimmung.

Das Honwerkzeug 158 weist eine oder mehrere Öffnungen 178 auf, welche in fluidwirksamer Verbindung mit einer Kühlschmierstoff-Schnittstelle des Honwerkzeugs 158 stehen. Die Kühlschmierstoff-Schnittstelle ist an die Kühlschmierstoff-Schnittstelle 75 der Werkzeugspindel 52 anschließbar. Dadurch lässt sich das Honwerkzeug 158 bei einem Bearbeitungsvorgang mit Kühlschmierstoff versorgen.

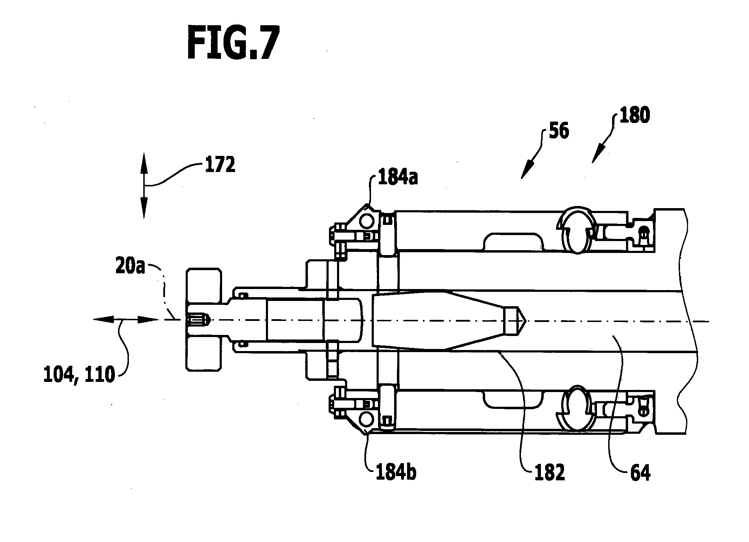

Ein Ausführungsbeispiel eines Vorbearbeitungswerkzeugs ist ein Feinbohrwerkzeug 180 (Figur 7).

Das Feinbohrwerkzeug 180 umfasst eine Stange 182 entsprechend der Stange 64, welche an die Stange 62 der Werkzeugspindel 52 ankoppelbar ist.

Das Feinbohrwerkzeug 180 umfasst Schneiden 184a, 184b. Die Schneiden 184a, 184b sind an die Stange 182 gekoppelt. Über Vorschub/Rückhub der Stange 182 in den Richtungen 104/110 parallel zu einer Rotationsachse 18a des Feinbohrwerkzeugs 180 lassen sich die Schneiden 184a, 184b in der Richtung 172 senkrecht zur Richtung 104/110 verstellen und insbesondere einem Werkstück zustellen. Durch eine solche Zustellung lässt sich beispielsweise ein Schneidenverschleiß kompensieren oder es lässt sich ein Bohrungsdurchmesser festlegen.

Vorgegeben durch die Position der Stange 182, welche wiederum gesteuert durch die Position der Stange 62 eingestellt wird, befinden sich die Schneiden 184a, 184b in einer bestimmten Position in der Richtung 172, wobei diese Position in der Richtung 172 gesteuert definiert einstellbar ist.

Grundsätzlich lassen sich Werkzeuge ankoppeln, welche eine Stange 64 aufweisen. Da die Zug-Druck-Kupplungseinrichtung 82 eine Kopplung sowohl auf Zug als auch auf Druck bereitstellt, lässt sich über die entsprechende Werkzeugmaschine definiert die Position des oder der Werkzeugelemente in der Richtung 172 einstellen. Dadurch ist es möglich, ein Werkzeug kompakt aufzubauen, da beispielsweise innerhalb des Werkzeugs keine Rückstelleinrichtung vorgesehen werden muss; der Rückhub in der Rückhubrichtung 110 erfolgt über die Beaufschlagungseinrichtung 60 der Werkzeugspindel 52.

Weiterhin lassen sich durch entsprechende Werkzeuge auch dreidimensionale geometrische Strukturen bearbeiten. Beispielsweise lassen sich Freiformflächen herstellen.

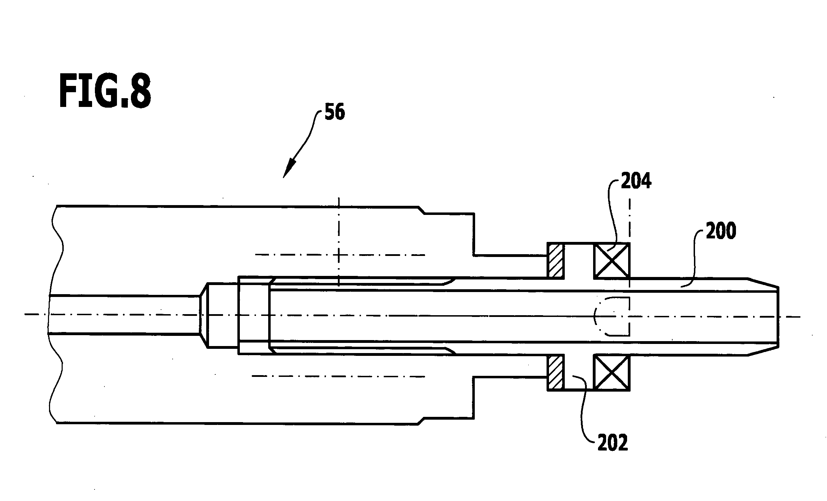

Das Werkzeug 56 weist zur Fluidankopplung an die Werkzeugspindel 52 ein Rohr 200 auf (Figur 8). Dieses Rohr 200 ist in den Eintauchbereich 100 der Werkzeugspindel 52 eintauchbar und entsprechend lässt sich eine Fluidankopplung realisieren.

An dem Rohr 200 sitzt ein Flansch 202, an welchem eine Dichtung 204 zur Fluidabdichtung angeordnet ist.

Bei einer Ausführungsform (Figur 8) ist das Rohr 200 als starres Rohr ausgebildet, welches fest (unbeweglich) an dem Werkzeug 56 sitzt.

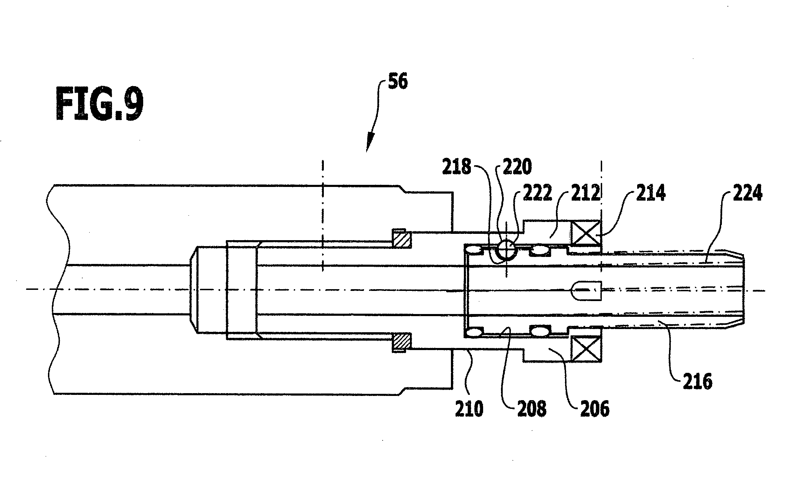

Bei einer weiteren Ausführungsform (Figur 9) ist an dem Werkzeug 56 eine Halteeinrichtung 206 fixiert. Diese Halteeinrichtung 206 hat einen Aufnahmeraum 208. Der Aufnahmeraum 208 ist von einer Wandung 210 umgeben, an welcher ein Flansch 212 mit einer Dichtung 214 sitzt. In dem Aufnahmeraum 208 ist ein Rohr 216 beweglich und insbesondere pendelbar beweglich gelagert. Das Rohr 216 ist dabei axial (parallel zu den Richtungen 104, 110) unbeweglich oder höchstens mit geringem Spiel gelagert. In Querrichtungen dazu ist eine Bewegung ermöglicht.

Bei einem Ausführungsbeispiel sind dazu in dem Rohr 216 eine oder mehrere Aufnahmebereiche 218 angeordnet. Gegenüberliegend sind an der Wandung 210 korrespondierende Aufnahmebereiche 220 angeordnet. Jeweilige Haltekugeln 222 sind in Aufnahmebereichen 218 und 220 angeordnet. Diese Haltekugeln 222 sichern das Rohr 216 axial in dem Aufnahmeraum 208, ermöglichen jedoch eine pendelnde Querbeweglichkeit. Diese Querbeweglichkeit ist in Figur 9 durch die nicht durchgezogenen Linien mit dem Bezugszeichen 224 angedeutet; das Bezugszeichen 224 symbolisiert die Pendelmöglichkeit des Rohrs 216.

Die Querbeweglichkeit des Rohrs 216 an dem Werkzeug 56 ermöglicht ein leichteres Herstellen der Fluidankopplung, wenn das Werkzeug 56 an die Werkzeugspindel 52 eingesetzt wird.

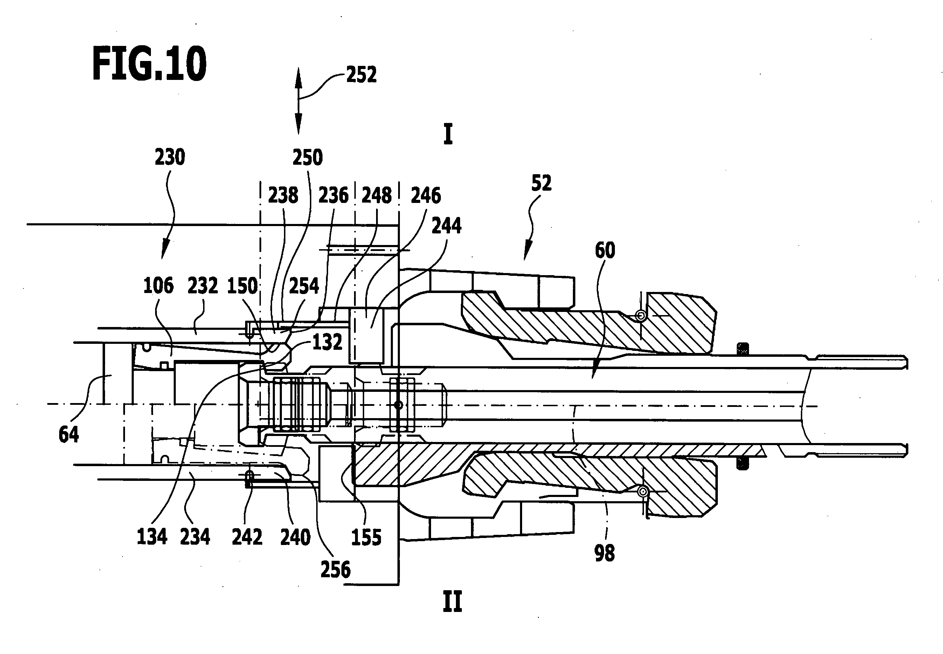

Bei einem weiteren Ausführungsbeispiel eines Werkzeugs, welches in Figur 10 in einer Teildarstellung gezeigt und dort mit 230 bezeichnet ist, ist wiederum eine Spannzange 106 vorgesehen. Für gleiche Elemente wie bei dem Werkzeug 56 werden dabei gleiche Bezugszeichen verwendet.

Die Werkzeugspindel 52 ist dabei gleich ausgebildet wie oben beschrieben und es werden gleiche Bezugszeichen verwendet.

Als Stützeinrichtung 232 für die Spannzange 106 ist dabei ein Anlageelement 234 vorgesehen, welches fest in dem Werkzeug 230 fixiert ist und die Spannzange 106 umgibt.

Im Bereich einer Stirnseite 236 ist an dem Anlageelement 234 eine Zungeneinrichtung 238 angeordnet. Die Zungeneinrichtung weist dabei eine oder mehrere elastische Zungen 240 auf. Beispielsweise ist an dem Anlageelement 234 im Bereich einer Zunge 240 ein Einschnitt 242 gebildet, welcher eine elastische federnde Schwenkbarkeit der entsprechenden Zunge 240 erlaubt. Der Einschnitt 242 ist dabei jeweils an dem Anlageelement 234 an einer der Spannzange 106 abgewandten Außenseite angeordnet.

In einer Fixierungsposition (Figur 10 oben) stützt sich der Gegenbereich 150 der Spannzange 106 an der Zungeneinrichtung 238 ab. Dadurch ist ein Formschluss mit der Beaufschlagungseinrichtung 60 erreicht.

An dem Werkzeug ist eine Sperreinrichtung 244 angeordnet, welche in der Fixierungsposition des Werkzeugs 230 an der Werkzeugspindel 52 die Beweglichkeit der Zungeneinrichtung 238 sperrt.

Die Sperreinrichtung 244 umfasst eine Einwirkeinrichtung 246, auf welche die Stirnseite 155 der Werkzeugspindel 52 einwirken kann. Sie umfasst ferner ein Stützelement 248, welches an der Einwirkeinrichtung 246 sitzt und dabei in der Fixierungsposition zwischen der Zungeneinrichtung 238 und einer diese umgebenden Wand 250 sitzt. Eine Querbeweglichkeit in einer Richtung 252 von der Stange 64 des Werkzeugs 230 weg ist durch dieses Stützelement 248 gesperrt. Dadurch ist die Fixierungsstellung, in welcher der erste Anlagebereich 132 und die Spannzange 106 an dem zweiten Anlagebereich 234 der Beaufschlagungseinrichtung 60 anliegt.

Es kann dabei vorgesehen sein, dass an dem Stützelement 248 eine Erhebung 254 angeordnet ist, welche zusätzlich noch die Zungeneinrichtung 238 gegen die Spannzange 106 drückt.

Durch die Stirnseite 155 der Werkzeugspindel 52 kann die Einwirkeinrichtung 246 nach vorne verschoben werden (Figur 10, unterer Teil II). Dadurch wird das Stützelement 248 ebenfalls nach vorne verschoben. Es kann dabei die Erhebung 254 in den Einschnitt 242 eintauchen. Dadurch drückt die Zungeneinrichtung 238 nicht mehr auf die Spannzange 106. Außerdem kann jetzt die Spannzange 106 die Zungeneinrichtung 238 von der Beaufschlagungseinrichtung 60 wegdrücken.

Wenn entsprechend die Beaufschlagungseinrichtung 60 zurückgezogen wird, dann die Anlage zwischen dem ersten Anlagebereich 132 und dem zweiten Anlagebereich 134 aufgehoben und die Spannzange kann herausschwenken und dabei kann der Gegenbereich 150 in einen Eintauchbereich 256 vor der Stirnseite 236, das heißt vor der Zungeneinrichtung 238 eintauchen.

Dadurch ist der Formschluss gelöst und das Werkzeug kann entnommen werden bzw. es ist eine Stellung bereitgestellt, in welcher ein Werkzeug 230 eingesetzt werden kann.

Die Rückbewegung des Stützelements 248 kann beispielsweise über eine Federbeaufschlagung erfolgen.

Die erfindungsgemäße Zug-Druck-Kupplungseinrichtung 82 funktioniert wie folgt:

In der Fixierungsposition 84 der Zug-Druck-Kupplungseinrichtung 82, welche in den Figuren 4 und 5 oben gezeigt ist, drückt die Federeinrichtung 144 die Hülse 136 in Richtung der Werkzeugspindel 52. Die Stange 64 ist mit ihrem Eintauchbereich 100 in der Ausnehmung 90 eingetaucht, wobei das vordere Ende 88 an der Stirnfläche 102 anliegt. Der erste Anlagebereich 132 der Greifarme 122 liegt an dem zweiten Anlagebereich 134 an. Die Federeinrichtung 130 ist bestrebt, durch Schwenken der entsprechenden Greifarme 122 den ersten Anlagebereich 132 von dem zweiten Anlagebereich 134 wegzubewegen. Die Innenseite 146 der Hülse 136 sperrt diese Auseinanderbewegung. Es ist dadurch eine Formschlussverbindung zwischen der Stange 62 und der Stange 64 durch die Spannzange 106 erreicht.

Durch Linearverschiebung der Stange 62 wird die Stange 64 mitverschoben. Durch die formschlüssige Verbindung über die Spannzange 106 initiiert dabei eine Vorwärtshubbewegung der Stange 62 in der Vorschubrichtung 104 eine Vorwärtshubbewegung der Stange 64 durch Druckausübung auf diese. Durch Rückhub der Stange 62 in der Rückhubrichtung 110 wird die Stange 64 vermittelt über die Formschlussverbindung in der Rückhubrichtung 110 gezogen.

Der Endbereich 128 der Spannzange 106 gleitet dabei an der Innenseite 146 der Hülse. Die Spannzange 106 wird mit der Bewegung der Stange 62 und damit der Bewegung der Stange 64 verschoben.

Ein Arbeitshubbereich ist in Figur 5 mit dem Bezugszeichen 186 angedeutet. Dieses entspricht dem Weg zwischen den Positionen 88b und 88c gemäß Figur 4. Der Arbeitshubbereich 186 ist dabei zu einem Ende hin dadurch definiert, dass der Endbereich 128 der Spannzange 106 mit seinem Gegenbereich 150 gerade aus dem Eintauchbereich 148 ausgetaucht ist und durch die Innenseite 146 der Hülse 136 außerhalb des Eintauchbereichs 148 begrenzt wird. Das vordere Ende der Stange 62 befindet sich bei 88b (Figur 4).

Das andere Ende des Arbeitshubbereichs 186 ist im Wesentlichen durch die Verschiebungsstrecke der Stange 62 der Werkzeugspindel 52 definiert.

Das Ende des Arbeitshubbereichs 186 zu der Werkzeugspindel 52 hin (in Figur 5 mit 188 bezeichnet) ermöglicht ein Lösen eines Werkzeugs 56 von der Werkzeugspindel 52 bzw. ein Einsetzen eines Werkzeugs 56 in die Werkzeugspindel 52. Dazu wird die Stange 62 der Werkzeugspindel 52 so verfahren, dass sie mit ihrem vorderen Ende 88 an dem Ende 188 des Arbeitshubbereichs 186 liegt (siehe beispielsweise Figur 5 unten; Position 88b in Figur 4). Es wird dann auf das an einer Werkzeuglöseeinrichtung gehaltenes Werkzeug 56 eine Kraft auf das Anlageelement 154 in der Vorschubrichtung 104 durch die Werkzeugspindel 52 als Ganzes (durch Translationspositionierung dieser und Druckausübung über die Stirnseite 155) ausgeübt. Dadurch wird die Hülse 136 in Richtung der Sperreinrichtung 140 verschoben, bis diese dort anliegt. Die Werkzeuglösung erfordert entsprechend eine Kraft, welche größer ist als die Kraft der Federeinrichtung 144.

Dadurch wird der Eintauchbereich 148 so verschoben, dass er über dem zweiten Anlagebereich 134 der Stange 62 liegt. Die Spannzange 106 kann dann mit dem Endbereich 128 ausschwenken und dabei mit den Gegenbereich 150 in den Eintauchbereich 148 eintauchen. Die Weiterschwenkung wird gesperrt. Der Endbereich 128 der Spannzange 106 ist dann aus der Ausnehmung 94 ausgetaucht und es ist kein Formschluss mehr hergestellt.

Wenn jetzt die Stange 62 in der Rückhubrichtung 110 weiter verschoben wird, dann taucht der Eintauchbereich 100 der Stange 64 aus der Ausnehmung 90 aus und es ist eine Lösung des Werkzeugs 56 von der Werkzeugspindel 52 erreicht. (Position 88a in Figur 4)

Es ist dadurch ein Kuppelhubbereich 190 vorgegeben, welcher in Figur 5 angedeutet ist, welcher sich von dem Ende 188 des Arbeitshubbereichs 186 bis zu einer Position 192 erstreckt, in welcher die Stange 64 aus der Stange 62 ausgetaucht ist (Bereich zwischen den Positionen 88a und 88b gemäß Figur 4).

Der Arbeitshubbereich 186 ist ein Werkstückbearbeitungshubbereich der Stange 62 der Werkzeugspindel 52. Der Kuppelhubbereich 190 der Stange 62 ist ein Lösungsbereich bzw. Fixierungsbereich für das Entfernen bzw. Einsetzen eines Werkzeugs 56 an der Werkzeugspindel 52.

Zum Einsetzen eines Werkzeugs 56 wird die Stange 62 in die Position 192 verfahren und das Werkzeug 56 wird angesetzt. Die Stange 62 wird dann in der Vorschubrichtung 104 bewegt bis der Eintauchbereich 100 eingetaucht ist. Die Bewegung erfolgt dabei bis zum Ende 188, das heißt bis das vordere Ende 88 der Stange 62 an dem Ende 188 des Arbeitshubbereichs 186 liegt. Wenn keine Kraft mehr auf das Anlageelement 154 ausgeübt wird, wird die Hülse 136 aufgrund Krafteinwirkung der Federeinrichtung 144 gegen das Anlageelement 154 in der Rückhubrichtung 110 verschoben. Dies bewirkt ein Austauchen des Gegenbereichs 150 aus dem Eintauchbereich 148 und der Endbereich 128 wird in die Ausnehmung 94 gedrückt. Der Endbereich 128 der Spannzange 106 liegt an der Innenseite 146 der Hülse 136 an und es ist ein Formschluss erreicht.

Durch Verschiebung der Stange 62 in dem Arbeitshubbereich 186 wird die Stange 64 mit verschoben, wobei sowohl eine Druckkupplung als auch eine Zugkupplung erreicht ist.

Bei dem Werkzeug 230 weist die entsprechende Stützeinrichtung 232 ein oder mehrere bewegliche Elemente, nämlich die Zunge oder Zungen 240 auf. Diese Zunge oder Zungen der Zungeneinrichtung 238 bilden eine Begrenzungseinrichtung für ein Eintauchbereich 256. Durch Freigabe oder Sperrung der Querbeweglichkeit über die Sperreinrichtung 244 lässt sich ein Werkzeug fixieren bzw. eine Lösung eines Werkzeugs durchführen.

### Bezugszeichenliste

- 10: Bearbeitungszentrum
- 12: Maschinenbett
- 14: Maschinengestell
- 16: Werkzeugträgereinrichtung
- 18a: erste Werkzeugspindel
- 18b: zweite Werkzeugspindel
- 20a: Rotationsachse
- 20b: Rotationsachse
- 22: Schlitten
- 24: Schlittenführung
- 26: Antriebseinrichtung
- 28: Schlitten
- 30: Schlittenführung
- 32: Werkstückträger
- 34: Lagereinrichtung
- 36: Werkzeug
- 38: Arbeitsraum
- 40: Werkzeugwechseleinrichtung
- 41: Steuerungseinrichtung
- 42: Schaltkasten
- 44: Vorderseite
- 46: Rückseite
- 48: Zusatzeinrichtung
- 50: Reinigungseinrichtung
- 52: Werkzeugspindel
- 54: Schnittstelle
- 56: Werkzeug
- 58: Gehäuse
- 60: Beaufschlagungseinrichtung
- 62: Stange (Werkzeugspindel)
- 64: Stange (Werkzeug)
- 66: Antriebseinrichtung
- 68: Elektromotor
- 70: Kugelgewindetrieb
- 72: Antriebseinrichtung
- 74: Druckluft-Schnittstelle
- 75: Kühlschmierstoff-Schnittstelle
- 76: Luftzuführungseinrichtung
- 77: Kanal
- 79: Versorgungseinrichtung
- 80: Werkzeugspindel-Werkzeug-Kombination
- 82: Zug-Druck-Kupplungseinrichtung
- 84: Fixierungsposition
- 86: Löseposition
- 88, 88a, b, c: vorderes Ende
- 90: Ausnehmung
- 92: Wandung
- 94: Ausnehmung
- 96: Zurückgesetzter Bereich
- 98: Achse
- 100: Eintauchbereich
- 102: Stirnfläche
- 104: Vorschubrichtung
- 106: Spannzange
- 108: Gehäuse
- 110: Rückhubrichtung
- 112: Endbereich
- 114: Hauptbereich
- 116: Zwischenbereich
- 118: Achse
- 120: Aufnahmeraum
- 122: Greifarm
- 124: Schwenkachse
- 126: Fixierungsbereich
- 128: Endbereich
- 130: Federeinrichtung
- 132: Erster Anlagebereich
- 134: Zweiter Anlagebereich
- 135: Stützeinrichtung
- 136: Hülse
- 138: Richtung/Gegenrichtung
- 140: Sperreinrichtung
- 142: Anlagefläche
- 144: Federeinrichtung
- 146: Innenseite
- 148: Eintauchbereich
- 150: Gegenbereich
- 152: Stirnseite
- 153: Einwirkeinrichtung
- 154: Anlageelement
- 155: Stirnseite
- 156: Spannzange
- 158: Honwerkzeug
- 160: Honleiste
- 162: Schneideneinrichtung
- 164: Erster keilförmiger Bereich
- 166: Zweiter keilförmiger Bereich
- 168: Erster Bereich mit keilförmiger Gegenlauffläche
- 170: Zweiter Bereich mit keilförmiger Gegenlauffläche
- 172: Richtung
- 174: Öffnung
- 176: Kanal
- 178: Öffnung
- 180: Feinbohrwerkzeug
- 182: Stange
- 184a, b: Schneide
- 186: Arbeitshubbereich
- 188: Ende
- 190: Kuppelhubbereich
- 192: Position
- 200: Rohr
- 202: Flansch
- 204: Dichtung
- 206: Halteeinrichtung
- 208: Aufnahmeraum
- 210: Wandung
- 212: Flansch
- 214: Dichtung
- 216: Rohr
- 218: Aufnahmebereich
- 220: Aufnahmebereich
- 222: Haltekugeln
- 224: Pendelmöglichkeit
- 230: Werkzeug
- 232: Stützeinrichtung
- 234: Anlageelement
- 236: Stirnseite
- 238: Zungeneinrichtung
- 240: Zunge
- 242: Einschnitt
- 244: Sperreinrichtung
- 246: Einwirkeinrichtung
- 248: Stützelement
- 250: Wand
- 252: Richtung
- 254: Erhebung
- 256: Eintauchbereich

## Patentansprüche

1. Werkzeugspindel-Werkzeug-Kombination für eine Werkzeugmaschine, umfassend ein Werkzeug (56), eine Werkzeugspindel (52), an welcher das Werkzeug (56) lösbar fixierbar ist und über welche das Werkzeug (56) rotierbar ist, wobei das Werkzeug (56) mindestens eine linearbewegliche Stange (64) aufweist und die Werkzeugspindel (52) eine Beaufschlagungseinrichtung (60) umfasst, welche auf die mindestens eine linearbewegliche Stange (64) des Werkzeugs (56) wirkt, und eine Zug-Druck-Kupplungseinrichtung (82), durch welche die mindestens eine Stange (64) des Werkzeugs (56) an die Beaufschlagungseinrichtung (60) koppelbar ist, wobei bei Ankopplung die mindestens eine Stange (64) durch die Beaufschlagungseinrichtung (60) auf Druck und Zug betätigbar ist,
wobei die Zug-Druck-Kupplungseinrichtung (82) eine Spannzange (106) umfasst, **dadurch gekennzeichnet, dass** die Spannzange (106) im Werkzeug (56) angeordnet ist.

2. Werkzeugspindel-Werkzeug-Kombination nach Anspruch 1, **dadurch gekennzeichnet, dass** die Beaufschlagungseinrichtung (60) mindestens eine linearbewegliche Stange (62) aufweist, an welche die mindestens eine Stange (64) des Werkzeugs (56) koppelbar ist.

3. Werkzeugspindel-Werkzeug-Kombination nach Anspruch 1 oder 2, **dadurch gekennzeichnet, dass** die Werkzeugspindel (52) eine Antriebseinrichtung (66) für die Beaufschlagungseinrichtung (60) umfasst.

4. Werkzeugspindel-Werkzeug-Kombination nach einem der vorangehenden Ansprüche, **dadurch gekennzeichnet, dass** das Werkzeug (56) mindestens ein Werkzeugelement (160; 184a, 184b) umfasst, welches durch die mindestens eine Stange (64) des Werkzeugs (56) verstellbar ist, und insbesondere, dass das mindestens eine Werkzeugelement (160) eine Schneide (184a, 184b) oder eine Schneideneinrichtung (162) ist oder umfasst.

5. Werkzeugspindel-Werkzeug-Kombination nach einem der vorangehenden Ansprüche, **dadurch gekennzeichnet, dass** das Werkzeug (56) mindestens eine Schneide (184a, 184b) oder Schneideneinrichtung (162) umfasst, welche an die mindestens eine Stange (64) des Werkzeugs (56) gekoppelt ist, wobei die Schneide (184a, 184b) oder Schneideneinrichtung (162) über die mindestens eine Stange (64) des Werkzeugs (56) quer zu einer Rotationsachse (20a) des Werkzeugs (56) verstellbar ist.

6. Werkzeugspindel-Werkzeug-Kombination nach einem der vorangehenden Ansprüche, **dadurch gekennzeichnet, dass** die Zug-Druck-Kupplungseinrichtung (82) eine Fixierungsposition (84) definiert, in welcher die Beaufschlagungseinrichtung (60) mit der mindestens einen Stange (64) des Werkzeugs (56) auf Zug und Druck verspannt ist, und insbesondere, dass in der Fixierungsposition (84) ein Stirnende (88) der Beaufschlagungseinrichtung (60) an der mindestens einen Stange (64) des Werkzeugs (56) anliegt, und insbesondere, dass in der Fixierungsposition (84) die mindestens eine Stange (64) des Werkzeugs (56) und die Beaufschlagungseinrichtung (60) formschlüssig verbunden sind.

7. Werkzeugspindel-Werkzeug-Kombination nach einem der vorangehenden Ansprüche, **dadurch gekennzeichnet, dass** die Beaufschlagungseinrichtung (60) eine Ausnehmung (90) aufweist und die mindestens eine Stange (64) des Werkzeugs (56) einen Eintauchbereich (100) in die Ausnehmung (90) aufweist, und insbesondere, dass ein zurückgesetzter Bereich (96) an einer Außenseite einer Wandung (92) der Ausnehmung (90) angeordnet ist.

8. Werkzeugspindel-Werkzeug-Kombination nach einem der vorangehenden Ansprüche, **dadurch gekennzeichnet, dass** das Werkzeug (56) und/oder die Werkzeugspindel (52) ein starres Rohr (200) zur Fluidankopplung aufweist.

9. Werkzeugspindel-Werkzeug-Kombination nach einem der Ansprüche 1 bis 7, **dadurch gekennzeichnet, dass** das Werkzeug (56) und/oder die Werkzeugspindel (52) ein beweglich gelagertes Rohr (216) zur Fluidankopplung zwischen Werkzeugspindel (52) und Werkzeug (56) aufweist.

10. Werkzeugspindel-Werkzeug-Kombination nach einem der vorangehenden Ansprüche, **dadurch gekennzeichnet, dass** die Spannzange (106) mit der mindestens einen Stange (64) des Werkzeugs (56) verbunden ist und mit dieser verschieblich ist.

11. Werkzeugspindel-Werkzeug-Kombination nach einem der vorangehenden Ansprüche, **dadurch gekennzeichnet, dass** die Spannzange (106) mindestens einen schwenkbaren Greifarm (122) aufweist, und insbesondere, dass der mindestens eine Greifarm (122) um eine Schwenkachse (124) schwenkbar ist, welche quer zu einer Bewegungsrichtung (104; 110) der mindestens einen Stange (64) des Werkzeugs (56) orientiert ist, und insbesondere, dass der mindestens eine Greifarm (122) federbeaufschlagt ist, wobei eine Federkraft bestrebt ist, den mindestens einen Greifarm (122) von einer Achse (118) der mindestens einen Stange (64) des Werkzeugs (56) wegzuschwenken.

12. Werkzeugspindel-Werkzeug-Kombination nach einem der vorangehenden Ansprüche, **dadurch gekennzeichnet, dass** die Spannzange (106) einen ersten Anlagebereich (132) aufweist, welcher mit einem zweiten Anlagebereich (134) der Beaufschlagungseinrichtung (60) kooperiert, wobei, wenn die mindestens eine Stange (64) des Werkzeugs (56) an die Beaufschlagungseinrichtung (60) gekoppelt ist, der erste Anlagebereich (132) an dem zweiten Anlagebereich (134) anliegt und ein Formschluss hergestellt ist, und insbesondere, dass der erste Anlagebereich (132) durch eine Verbreiterung an einem Endbereich (128) eines Greifarms (122) gebildet ist, und insbesondere, dass der zweite Anlagebereich (134) durch einen rückspringenden Bereich (96) an der Beaufschlagungseinrichtung (60) gebildet ist.

13. Werkzeugspindel-Werkzeug-Kombination nach einem der vorangehenden Ansprüche, **dadurch gekennzeichnet, dass** das Werkzeug (56) eine Stützeinrichtung (135; 232) aufweist, an welcher sich die Spannzange (106) in einer Fixierungsposition (84) der Zug-Druck-Kupplungseinrichtung (82) abstützt, und insbesondere, dass in der Fixierungsposition (84) der erste Anlagebereich (132) an dem zweiten Anlagebereich (134) anliegt und die Stützeinrichtung (135; 232) eine Sperrfläche für die Spannzange (106) bereitstellt, und insbesondere, dass die Stützeinrichtung (135; 232) beweglich ist und/oder ein oder mehrere bewegliche Elemente (240) aufweist, und insbesondere, dass die Stützeinrichtung (135; 232) einen Eintauchbereich (148) für einen Gegenbereich (150) der Spannzange (106) aufweist oder begrenzt, wobei in einer Fixierungsposition (84) der Zug-Druck-Kupplungseinrichtung (82) der Gegenbereich (150) außerhalb des Eintauchbereichs (148) liegt und in einer Löseposition (86) der Zug-Druck-Kupplungseinrichtung (82) in den Eintauchbereich (148) eingetaucht ist, und insbesondere, dass, wenn der Gegenbereich (150) in den Eintauchbereich (148) eingetaucht ist, ein erster Anlagebereich (132) der Spannzange (106) nicht an einem zweiten Anlagebereich (134) der Beaufschlagungseinrichtung (60) anliegt, und insbesondere, dass der Eintauchbereich (148) oder eine Begrenzungseinrichtung (238) des Eintauchbereiches (256) beweglich ist, und insbesondere, dass die Stützeinrichtung (135) eine Hülse (136) aufweist, welche beweglich und insbesondere linearbeweglich an dem Werkzeug (56) angeordnet ist, und insbesondere, dass die Hülse (136) federbeaufschlagt ist, wobei eine Federkraft bestrebt ist, die Hülse (136) in der Fixierungsposition (84) der Zug-Druck-Kupplungseinrichtung (82) in Richtung der Beaufschlagungseinrichtung (60) zu drücken, und insbesondere **gekennzeichnet durch** eine Sperreinrichtung (140) zur Sperrung einer Verschieblichkeit der Hülse (136) von der Beaufschlagungseinrichtung (60) weg, und insbesondere, dass eine Löseposition (86) der Zug-Druck-Kupplungseinrichtung (82) **durch** ein Anliegen der Hülse (136) an der Sperreinrichtung (140) definiert ist, und insbesondere, dass die Hülse (136) eine Stirnseite aufweist, auf welcher die Werkzeugspindel (52) zur Verschiebung der Hülse (136) mittels der Werkzeugspindel (52) und insbesondere mittels einer Stirnseite der Werkzeugspindel (52) einwirkbar ist.

14. Werkzeugspindel-Werkzeug-Kombination nach Anspruch 13, **dadurch gekennzeichnet, dass** die Stützeinrichtung (236) eine Zungeneinrichtung (238) mit mindestens einer Zunge (240) aufweist, welche quer zu einer Verschiebungsrichtung der Stange (64) beweglich ist, und insbesondere, dass die Zungeneinrichtung (238) einen Eintauchbereich (256) für die Spannzange (106) begrenzt, und insbesondere, dass an dem Werkzeug (230) eine Sperreinrichtung (244) angeordnet ist, auf welcher die Werkzeugspindel (52) insbesondere mittels einer Stirnseite (155) einwirkbar ist, um die Querbeweglichkeit der mindestens einen Zunge (240) freizugeben und/oder zu sperren, und insbesondere, dass die Sperreinrichtung (244) mindestens ein Stützelement (248) umfasst, welches zwischen der Zungeneinrichtung (238) und einer Wand (250) des Werkzeugs (230) verschieblich ist.

15. Werkzeugspindel-Werkzeug-Kombination nach Anspruch 13, **dadurch gekennzeichnet, dass** das Werkzeug (56; 230) eine Einwirkeinrichtung (153; 246) für die Werkzeugspindel (52) und insbesondere eine Stirnseite (155) der Werkzeugspindel (52) aufweist, über welche in Abhängigkeit der Position der Werkzeugspindel (52) eine Eintauchbarkeit des Gegenbereichs (150) der Spannzange (106) in den Eintauchbereich (148; 256) freigebbar und/oder sperrbar ist, und insbesondere, dass durch die Einwirkeinrichtung (153; 246) eine Bewegung oder Beweglichkeit der Stützeinrichtung (135; 232) oder eines Teils der Stützeinrichtung (135; 232) bewirkbar ist.

## Claims

1. Spindle/tool combination for a machine tool, comprising a tool (56), a spindle (52), to which the tool (56) is releasably fixable and by means of which the tool (56) is rotatable, wherein the tool (56) has at least one linearly movable rod (64) and the spindle (52) comprises a loading device (60), which acts on the at least one linearly movable rod (64) of the tool (56), and a pull/push coupling device (82), by means of which the at least one rod (64) of the tool (56) is couplable to the loading device (60), the at least one rod (64) being actuable by means of the loading device (60) by pushing and pulling when coupled, wherein the pull/push coupling device (82) comprises a clamping jaw (106) **characterised in that** the clamping jaw (106) is arranged in the tool (56).

2. Spindle/tool combination according to claim 1, **characterised in that** the loading device (60) has at least one linearly movable rod (62), to which the at least one rod (64) of the tool (56) is couplable.

3. Spindle/tool combination according to claim 1 or 2, **characterised in that** the spindle (52) comprises a drive device (66) for the loading device (60).

4. Spindle/tool combination according to any one of the preceding claims, **characterised in that** the tool (56) comprises at least one tool element (160; 184a, 184b), which is adjustable by means of the at least one rod (64) of the tool (56), and in particular **in that** the at least one tool element (160) is or comprises a blade (184a, 184b) or a blade device (162).

5. Spindle/tool combination according to any one of the preceding claims, **characterised in that** the tool (56) comprises at least one blade (184a, 184b) or blade device (162), which is coupled to the at least one rod (64) of the tool (56), the blade (184a, 18b) or blade device (162) being adjustable transversely to a rotational axis (20a) of the tool (56) by means of the at least one rod (64) of the tool (56).

6. Spindle/tool combination according to any one of the preceding claims, **characterised in that** the pull/push coupling device (82) defines a fixing position (84), in which the loading device (60) is braced with regard to pulling and pushing with the at least one rod (64) of the tool (56), and in particular **in that** in the fixing position (84), an end face (88) of the loading device (60) abuts the at least one rod (64) of the tool (56), and in particular **in that** in the fixing position (84), the at least one rod (64) of the tool (56) and the loading device (60) are positively connected.

7. Spindle/tool combination according to any one of the preceding claims, **characterised in that** the loading device (60) has a recess (90) and the at least one rod (64) of the tool (56) has a penetration region (100) into the recess (90), and in particular **in that** a set-back region (96) is arranged on an outside of a wall (92) of the recess (90).

8. Spindle/tool combination according to any one of the preceding claims, **characterised in that** the tool (56) and/or the spindle (52) has a rigid tube (200) for fluid coupling.

9. Spindle/tool combination according to any one of claims 1 to 7, **characterised in that** the tool (56) and/or the spindle (52) has a movably mounted tube (216) for fluid coupling between the spindle (52) and tool (56).

10. Spindle/tool combination according to any one of the preceding claims, **characterised in that** the clamping jaw (106) is connected to the at least one rod (64) of the tool (56) and is displaceable therewith.

11. Spindle/tool combination according to any one of the preceding claims, **characterised in that** the clamping jaw (106) has at least one pivotable gripping arm (122), and in particular **in that** the at least one gripping arm (122) is pivotable about a pivot axis (124), which is oriented transverse to a movement direction (104; 110) of the at least one rod (64) of the tool (56), and in particular **in that** the at least one gripping arm (122) is spring-loaded, a spring force tending to pivot the at least one gripping arm (122) away from an axis (118) of the at least one rod (64) of the tool (56).

12. Spindle/tool combination according to any one of the preceding claims, **characterised in that** the clamping jaw (106) has a first abutment region (132), which cooperates with a second abutment region (134) of the loading device (60), wherein, when the at least one rod (64) of the tool (56) is coupled to the loading device (60), the first abutment region (132) abuts the second abutment region (134) and a positive engagement is produced, and in particular **in that** the first abutment region (132) is formed by a widening on an end region (128) of a gripping arm (122), and in particular **in that** the second abutment region (134) is formed by a set-back region (96) on the loading device (60).

13. Spindle/tool combination according to any one of the preceding claims, **characterised in that** the tool (56) has a support device (135; 232), on which the clamping jaw (106) is supported in a fixing position (84) of the pull/push coupling device (82), and in particular **in that** in the fixing position (84), the first abutment region (132) abuts the second abutment region (134) and the support device (135; 232) provides a blocking face for the clamping jaw (106), and in particular **in that** the support device (135; 232) is movable and/or has one or more movable elements (240), and in particular **in that** the support device (135; 232) has or delimits an entry region (148) for a counter-region (150) of the clamping jaw (106), wherein in a fixing position (84) of the pull/push coupling device (82), the counter-region (150) is located outside the entry region (148) and, in a release position (86) of the pull/push coupling device (82), penetrates the entry region (148), and in particular **in that**, when the counter-region (150) penetrates the entry region (148), a first abutment region (132) of the clamping jaw (106) does not abut a second abutment region (134) of the loading device (60), and in particular **in that** the entry region (148) or a limiting device (238) of the entry region (256) is movable, and in particular **in that** the support device (135) has a sleeve (136), which is movable and, in particular linearly movable, on the tool (56), and in particular **in that** the sleeve (136) is spring-loaded, a spring force tending to push the sleeve (136), in the fixing position (84) of the pull/push coupling device (82), in the direction of the loading device (60), and in particular **characterised by** a blocking device (140) for blocking a displaceability of the sleeve (136) away from the loading device (60), and in particular in that a release position (86) of the pull/push coupling device (82) is defined by the sleeve (136) abutting the blocking device (140), and in particular in that the sleeve (136) has an end face, on which the spindle (52) is effective to displace the sleeve (136) by means of the spindle (52) and, in particular, by means of an end face of the spindle (52).

14. Spindle/tool combination according to claim 13, **characterised in that** the support device (236) has a tongue device (238) with at least one tongue (240), which is movable transversely to a displacement direction of the rod (64), and in particular **in that** the tongue device (238) delimits an entry region (256) for the clamping jaw (106), and in particular n that arranged on the tool (230) is a blocking device (244), on which the spindle (52) is effective, in particular by means of an end face (155), in order to free and/or block the transverse movability of the at least one tongue (240), and in particular **in that** the blocking device (244) comprises at least one support element (248), which is displaceable between the tongue device (238) and a wall (250) of the tool (230).

15. Spindle/tool combination according to claim 13, **characterised in that** the tool (56; 230) has an operating device (153; 246) for the spindle (52) and in particular an end face (155) of the spindle (52), by means of which, depending on the position of the spindle (52), an ability of the counter-region (150) of the clamping jaw (106) to penetrate the entry region (148; 256) can be freed and/or blocked, and in particular **in that** a movement or movability of the support device (135; 232) or a part of the support device (135; 232) can be effected by the operating device (153; 246).

## Revendications

1. Combinaison d'une broche d'outil et d'un outil pour une machine-outil, comprenant un outil (56), une broche d'outil (52) sur laquelle l'outil (56) peut être fixé de façon séparable et par laquelle l'outil (56) peut être entraîné en rotation, dans laquelle l'outil (56) présente au moins une tige linéairement mobile (64) et la broche d'outil (52) comprend un dispositif de manoeuvre (60), qui agit sur ladite au moins une tige linéairement mobile (64), et un dispositif de couplage à traction-poussée (82), par lequel ladite au moins une tige (64) de l'outil (56) peut être couplée au dispositif de manoeuvre (60), dans laquelle par le couplage ladite au moins une tige (64) peut être actionnée en traction et poussée par le dispositif de manoeuvre (60), dans laquelle le dispositif de couplage en traction-poussée (82) comprend une pince de serrage (106), **caractérisée en ce que** la pince de serrage (106) est disposée dans l'outil (56).

2. Combinaison d'une broche d'outil et d'un outil selon la revendication 1, **caractérisée en ce que** le dispositif de manoeuvre (60) présente au moins une tige linéairement mobile (62), à laquelle ladite au moins une tige (64) de l'outil (56) peut être couplée.

3. Combinaison d'une broche d'outil et d'un outil selon la revendication 1 ou 2, **caractérisée en ce que** la broche d'outil (52) comprend un dispositif d'entraînement (66) pour le dispositif de manoeuvre (60).

4. Combinaison d'une broche d'outil et d'un outil selon l'une quelconque des revendications précédentes, **caractérisée en ce que** l'outil (56) comprend au moins un élément d'outil (160; 184a, 184b), qui est réglable par ladite au moins une tige (64) de l'outil (56), et en particulier **en ce que** ledit au moins un élément d'outil (160) est ou comprend un tranchant (184a, 184b) ou un dispositif de coupe (162).

5. Combinaison d'une broche d'outil et d'un outil selon l'une quelconque des revendications précédentes, **caractérisée en ce que** l'outil (56) comprend au moins un tranchant (184a, 184b) ou un dispositif de coupe (162), qui est couplé à ladite au moins une tige (64) de l'outil (56), dans laquelle le tranchant (184a, 184b) ou le dispositif de coupe (162) est réglable par ladite au moins une tige (64) de l'outil (56) transversalement à un axe de rotation (20a) de l'outil (56).

6. Combinaison d'une broche d'outil et d'un outil selon l'une quelconque des revendications précédentes, **caractérisée en ce que** le dispositif de couplage à traction-poussée (82) définit une position de fixation (84), dans laquelle le dispositif de manoeuvre (60) est bloqué en traction et poussée au moyen de ladite au moins une tige (64) de l'outil (56), et en particulier **en ce que**, dans la position de fixation (84), une extrémité frontale (88) du dispositif de manoeuvre (60) est appliquée sur ladite au moins une tige (64) de l'outil (56), et en particulier **en ce que**, dans la position de fixation (84), ladite au moins une tige (64) de l'outil (56) et le dispositif de manoeuvre (60) sont assemblés par emboîtement.

7. Combinaison d'une broche d'outil et d'un outil selon l'une quelconque des revendications précédentes, **caractérisée en ce que** le dispositif de manoeuvre (60) présente un évidement (90) et ladite au moins une tige (64) de l'outil (56) présente une zone d'engagement (100) dans l'évidement (90), et en particulier **en ce qu'**une zone située en retrait (96) est disposée sur un côté extérieur d'une paroi (92) de l'évidement (90).

8. Combinaison d'une broche d'outil et d'un outil selon l'une quelconque des revendications précédentes, **caractérisée en ce que** l'outil (56) et/ou la broche d'outil (52) présente un tube rigide (200) destiné au couplage d'un fluide.

9. Combinaison d'une broche d'outil et d'un outil selon l'une quelconque des revendications 1 à 7, **caractérisée en ce que** l'outil (56) et/ou la broche d'outil (52) présente un tube mobile (216) destiné au couplage d'un fluide entre la broche d'outil (52) et l'outil (56).

10. Combinaison d'une broche d'outil et d'un outil selon l'une quelconque des revendications précédentes, **caractérisée en ce que** la pince de serrage (106) est reliée à ladite au moins une tige (64) de l'outil (56) et est déplaçable avec celle-ci.

11. Combinaison d'une broche d'outil et d'un outil selon l'une quelconque des revendications précédentes, **caractérisée en ce que** la pince de serrage (106) présente au moins un bras de saisie pivotant (122), et en particulier **en ce que** ledit au moins un bras de saisie (122) peut pivoter autour d'un axe de pivotement (124), qui est orienté transversalement à une direction de mouvement (104; 110) de ladite au moins une tige (64) de l'outil (56), et en particulier **en ce que** ledit au moins un bras de saisie (122) est soumis à un ressort, dans laquelle une force de ressort tend à écarter ledit au moins un bras de saisie (122) d'un axe (118) de ladite au moins une tige (64) de l'outil (56).

12. Combinaison d'une broche d'outil et d'un outil selon l'une quelconque des revendications précédentes, **caractérisée en ce que** la pince de serrage (106) présente une première zone d'appui (132), qui coopère avec une deuxième zone d'appui (134) du dispositif de manoeuvre (60), dans laquelle, lorsque ladite au moins une tige (64) de l'outil (56) est couplée au dispositif de manoeuvre (60), la première zone d'appui (132) s'applique sur la deuxième zone d'appui (134) et une liaison par emboîtement est réalisée, et en particulier **en ce que** la première zone d'appui (132) est formée par un élargissement sur une zone d'extrémité (128) d'un bras de saisie (122), et en particulier **en ce que** la deuxième zone d'appui (134) est formée par une zone située en retrait (96) sur le dispositif de manoeuvre (60).

13. Combinaison d'une broche d'outil et d'un outil selon l'une quelconque des revendications précédentes, **caractérisée en ce que** l'outil (56) présente un dispositif de soutien (135; 232), sur lequel la pince de serrage (106) s'appuie dans une position de fixation (84) du dispositif de couplage à traction-poussée (82), et en particulier **en ce que**, dans la position de fixation (84), la première zone d'appui (132) s'applique sur la deuxième zone d'appui (134) et le dispositif de soutien (135; 232) procure une face d'arrêt pour la pince de serrage (106), et en particulier **en ce que** le dispositif de soutien (135; 232) est mobile et/ou présente un ou plusieurs éléments mobiles (240), et en particulier **en ce que** le dispositif de soutien (135; 232) présente et limite une zone d'engagement (148) pour une zone opposée (150) de la pince de serrage (106), dans laquelle, dans une position de fixation (84) du dispositif de couplage à traction-poussée (82), la zone opposée (150) est située à l'extérieur de la zone d'engagement (148) et, dans une position de libération (86) du dispositif de couplage à traction-poussée (82), est engagée dans la zone d'engagement (148), et en particulier **en ce que**, lorsque la zone opposée (150) est engagée dans la zone d'engagement (148), une première zone d'appui (132) de la pince de serrage (106) ne s'applique pas sur une deuxième zone d'appui (134) du dispositif de manoeuvre (60), et en particulier **en ce que** la zone d'engagement (148) ou un dispositif de limitation (238) de la zone d'engagement (256) est mobile, et en particulier **en ce que** le dispositif de soutien (135) présente une douille (136), qui est montée de façon mobile et en particulier linéairement mobile sur l'outil (56), et en particulier **en ce que** la douille (136) est soumise à un ressort, dans laquelle une force de ressort tend, dans la position de fixation (84) du dispositif de couplage à traction-poussée (82), à repousser la douille (136) en direction du dispositif de manoeuvre (60), et en particulier **caractérisée par** un dispositif de blocage (140) destiné à bloquer une mobilité de la douille (136) dans le sens l'éloignant du dispositif de manoeuvre (60), et en particulier en ce qu'une position de libération (86) du dispositif de couplage à traction-poussée (82) est définie par une application de la douille (136) sur le dispositif de blocage (140), et en particulier en ce que la douille (136) présente une face frontale, sur laquelle la broche d'outil (52) peut agir pour le déplacement de la douille (136) au moyen de la broche d'outil (52) et en particulier au moyen d'une face frontale de la broche d'outil (52).

14. Combinaison d'une broche d'outil et d'un outil selon la revendication 13, **caractérisée en ce que** le dispositif de soutien (236) présente un dispositif de languettes (238) avec au moins une languette (240), qui est mobile transversalement à une direction de déplacement de la tige (64), et en particulier **en ce que** le dispositif de languettes (238) limite une zone d'engagement (256) pour la pince de serrage (106), et en particulier **en ce qu'**un dispositif de blocage (244) est disposé sur l'outil (230), et sur lequel la broche d'outil (52) peut agir en particulier au moyen d'une face frontale (155), pour libérer et/ou bloquer la mobilité transversale de ladite au moins une languette (240) et en particulier **en ce que** le dispositif de blocage (244) comprend au moins un élément de soutien (248), qui est mobile entre le dispositif de languettes (238) et une paroi (250) de l'outil (230).

15. Combinaison d'une broche d'outil et d'un outil selon la revendication 13, **caractérisée en ce que** l'outil (56, 230) présente un dispositif d'action (153; 246) pour la broche d'outil (52) et en particulier une face frontale (155) de la broche d'outil (52), par laquelle, en fonction de la position de la broche d'outil (52), une possibilité d'engagement de la zone opposée (150) de la pince de serrage (106) dans la zone d'engagement (148; 256) peut être libérée et/ou bloquée, et en particulier **en ce qu'**un mouvement ou une mobilité du dispositif de soutien (135; 232) ou d'une partie du dispositif de soutien (135; 232) peut être activée par le dispositif d'action (153; 246).
